# EUROPEAN PATENT SPECIFICATION

(11) **EP 0 857 264 B1**
(45) Date of publication and mention of the grant of the patent: **24.04.2002**
(21) Application number: 95938916.4
(22) Date of filing: 27.10.1995
(51) Int. Cl.: F16D 39/00, B60K 17/10, B60K 17/14

(54) **AN AXLE DRIVING APPARATUS**
WELLENANTRIEBSVORRICHTUNG
APPAREIL D'ENTRAINEMENT POUR ESSIEU

(43) Date of publication of application: 12.08.1998
(73) Proprietor: Tuff Torq Corporation, Morristown, TN 37814-1051 (US); KANZAKI KOKYUKOKI MFG. CO., LTD., Amagasaki-Shi, Hyogo-661 (JP)
(72) Inventor: ABEND, Robert, Morristown, TN 37814-1051 (US); ISHII, Norihiro, Hyogo 661 (JP); OHASHI, Ryota, Hyogo 661 (JP)
(74) Representative: Grünecker, Kinkeldey, Stockmair & Schwanhäusser Anwaltssozietät
(86) International application number: US9513854
(87) International publication number: WO9715764

(56) References cited:
- US-A- 4 809 796
- US-A- 4 870 820
- US-A- 4 962 675
- US-A- 5 335 496
- US-A- 5 339 631

## Description

### Technical Field

This invention relates to an axle driving apparatus for independently driving the wheels of a self-propelled vehicle. In this particular invention the axle driving apparatus includes axle driving units provided with hydraulic stepless transmissions which drive single axles and which are adjacently disposed on a vehicle to independently rotate the drive wheels of such vehicle.

### Background Art

Axle driving units incorporating hydraulic stepless transmissions have been used to drive the axles of self-propelled vehicles for many years. Generally such units include a hydraulic pump driven by an input shaft and a hydraulic motor having an output shaft drivingly connected through a differential to a pair of oppositely disposed axles. An example of such a unit is disclosed in U.S. Letters Patent No. 4,914,907 and US Patent 5 335 496. However, certain self-propelled vehicles perform tasks which require tight turning capabilities and conventional hydraulic transmissions which drive a pair of axles through a differential gear assembly are not particularly suited for such purposes. Instead, vehicles have been provided with axles which are independently driven by separate axle drive units such that turns are accomplished by rotating drive wheels on opposite sides of the vehicle at different speeds and/or in different directions. Further, certain such axle driving units for independently driving single axle have incorporated hydraulic transmissions. However, such axle driving units have required housings which are of substantial height and substantial width in order to accommodate the hydraulic pump and motor and the other necessary components. Accordingly, vehicles have required large body frames in order to accommodate two such axle driving units in a side-by-side disposition, thus ruling out use of the units on many small vehicles. Further, even where a large body frame is provided, the center of gravity of the vehicle tends to be higher than is desirable for good roadability due to the height of the axle driving units and the need to dispose the prime mover of the vehicle in an elevated position to efficiently drive the units. For example, in U.S. Patent No. 5,127,215 a dual hydrostatic drive walk-behind mower is disclosed, but it can be readily seen that the axle driving units of this mower require substantial vertical and lateral space such that a large body frame is required. It will also be noted that due to the height of the transmission housings, the engine must be disposed in an elevated position which results in the vehicle having an undesirably high center of gravity. Moreover, multiple driving belts are required to drive the input shafts of the axle driving units. (See also, U.S. Patent Nos. 4,809,796 and 5,078,222). In U.S. Patent No. 4,819,508, a transmission system for working vehicles is disclosed which partially solves the problem of an undesirable center of gravity by reorienting the engine such that the crank shaft is horizontally disposed. However, the axle driving mechanism still occupies substantial vertical space on the body frame, making the center of gravity undesirably high. Further, reorientation of the engine complicates the drive belt systems for driving both the axle driving units and the mower blades.

Therefore, it is an object of the present invention to provide an axle driving apparatus for independently driving axles on opposite sides of a vehicle.

It is another object of the present invention to provide an axle driving apparatus which includes side-by-side axle drive units incorporating hydraulic transmissions which require limited vertical or lateral space such that the axle driving apparatus can be used by small self-propelled vehicles, and such that vehicles utilizing such axle driving apparatus define low centers of gravity for improved roadability.

Yet another object of the present invention is to provide an axle driving apparatus having input shafts and a drive belt system which facilitates drivingly connecting the apparatus to the prime mover of the vehicle.

Still another object of the present invention is to provide an axle driving apparatus which is inexpensive to manufacture and maintain.

### Summary of the Invention

The present invention provides an axle driving apparatus as defined in claims 1 and 14, which may be used for independently driving a pair of drive wheels on a self-propelled vehicle. A preferred embodiment of the present invention includes axle driving units which drive a single axle, and which are selectively configured as left or right side axle driving units such that a pair of such units can be adjacently disposed in a side-by-side orientation on the body frame of the vehicle to drivingly support oppositely disposed drive wheels. Each of the axle driving units includes a housing comprising an upper half housing and a lower half housing joined to each other through a peripheral joint or junction surface. The left axle driving unit includes a single axle which projects from the left side of the housing for supporting a drive wheel on the left side of the vehicle. The right driving unit includes a single axle which projects from the right side of its housing for supporting a drive wheel on the right side of the vehicle. Whereas the axles project from opposite sides in the left and right axle driving units, in the preferred embodiment the housing is provided with bearing supports to accommodate the mounting of either a left side projecting axle or a right side projecting axle. Accordingly, the housing can be alternatively used in the construction of a left side axle driving unit or a right side axle driving unit.

In each of the axle driving units, the housing defines an enlarged region which extends perpendicular to the longitudinal axis of the operatively associated axle such that the length of the housing is greater than its width, thereby facilitating the side-by-side mounting of two axle driving units. This enlarged region accommodates the mounting of a hydraulic stepless transmission which communicates the driving force of the prime mover, or engine, of the vehicle on which the apparatus is mounted to the operatively associated axle. The transmission includes a center section which defines a pump mounting surface on which a hydraulic pump is mounted and defines a motor mounting surface on which a hydraulic motor is mounted. The center section establishes closed circuit fluid communication between the hydraulic pump and motor and is configured to advantageously dispose the pump and motor in positions displaced from the single axle such that both the height and the width of the axle driving unit is reduced. Accordingly, the axle driving units can be mounted in a lower position on the vehicle to produce a lower center of gravity and can be accommodated in a relatively narrow body frame.

The hydraulic pump includes an input shaft which projects from the housing and which is drivingly connected by a driving belt to the prime mover of the vehicle. The hydraulic motor includes an input or motor shaft drivingly connected with the operatively associated single axle. The input shaft of each of the adjacent axle driving units carries an input pulley and a single driving belt is received around the input pulleys and a drive pulley mounted on the crank shaft of the prime mover to effect rotation of the input shafts. Further, the reduced height of the axle driving units permits the input pulleys and the drive pulley to be oriented in a triangular disposition and to be aligned on a common, substantially horizontal plane. Further, it allows the prime mover to be mounted in a low position on the body frame such that the vehicle defines a low center of gravity.

### Brief Description of the Drawings

The above mentioned features of the invention will be more clearly understood from the following detailed description of the invention read together with the drawings in which:
**FIG. 1** illustrates a perspective view of a walk behind mower, such mower being an example of one type of vehicle on which the axle driving apparatus of the present invention can be used.
**FIG. 2** illustrates a plan view, partially in section, of a walk behind mower having an axle driving apparatus of the present invention mounted thereon.
**FIG. 3** illustrates a perspective view of an axle driving apparatus of the present invention.
**FIG. 4** illustrates a plan view of an axle driving apparatus of the present invention.
**FIG. 5** illustrates a plan view, partially in section, of an axle driving unit of the present invention.
**FIG. 6** illustrates a front elevation view, in section taken at **A-A** in **FIG. 5,** of an axle driving unit of the present invention.
**FIG. 7** illustrates a rear elevation view, in section at **B-B** in **FIG. 5,** of an axle driving unit of the present invention.
**FIG. 8** illustrates a rear elevation view, in section at **C-C** in **FIG. 5,** of an axle driving unit of the present invention.
**FIG. 9** illustrates a side elevation view, in section at **D-D** in **FIG. 5,** of an axle driving unit of the present invention.
**FIG. 10** illustrates a perspective view of a center section of an axle driving unit of the present invention.
**FIG. 11** illustrates a plan view, partially in section, of an axle driving unit of the present invention.
**FIG. 12** illustrates a rear elevation view, in section at **C'-C'** in **FIG. 11,** of an axle driving unit of the present invention.
**FIG. 13** illustrates a plan view, partially in section, of an axle driving unit of a second embodiment of the present invention.
**FIG. 14** illustrates a front elevation view, in section at **E-E** in **FIG. 13,** of an axle driving unit of the second embodiment of the present invention.
**FIG. 15** illustrates a rear elevation view, in section at **F-F** in **FIG. 13,** of an axle driving unit of the second embodiment of the present invention.
**FIG. 16** illustrates a side elevation view, in section at **G-G** in **FIG. 13,** of an axle driving unit of the second embodiment of the present invention.
**FIG. 17** illustrates a perspective view of a center section of the second embodiment of the present invention.
**FIG. 18** illustrates a plan view, partially in section, of an axle driving unit of a third embodiment of the present invention.
**FIG. 19** illustrates a front elevation view, in section at **H-H** in **FIG. 18, of** an axle driving unit of the third embodiment of the present invention.
**FIG. 20** illustrates a perspective view of a center section of the third embodiment of the present invention.
**FIG. 21** illustrates a side elevation view, in section, of an axle driving unit of a fourth embodiment of the present invention.
**FIG. 22** illustrates a plan view, partially in section, taken at **I-I** in **FIG. 21,** of an axle driving unit of the fourth embodiment of the present invention.
**FIG. 23** illustrates a rear elevation view, in section taken at **J-J** in **FIG. 22,** of an axle driving unit of the fourth embodiment of the present invention.
**FIG. 24** illustrates a side elevation view, in section, of an axle driving unit of a fifth embodiment of the present invention.
**FIG. 25** illustrates a rear elevation view, in section taken at **K-K** in **FIG. 24,** of an axle driving unit of the fifth embodiment of the present invention.
**FIG. 26** illustrates a perspective view of the center section of the fifth embodiment of the present invention.
**FIG. 27** illustrates a plan view, partially in section, of an axle driving apparatus of the fifth embodiment of the present invention.
**FIG. 28** illustrates a side elevation view, in section taken at **L-L** of **FIG. 27,** of an axle driving apparatus of the fifth embodiment of the present invention.
**FIG. 29** illustrates a rear elevation view, in section taken at **M-M** of **FIG. 24,** of an axle driving apparatus of the fifth embodiment of the present invention.
**FIG. 30** illustrates a rear elevation view, in section, of an axle driving unit of a sixth embodiment of the present invention.
**FIG. 31** illustrates a plan view, partially in section, of an axle driving apparatus of the sixth embodiment of the present invention.

### Best Mode for Carrying Out the Invention

The axle driving apparatus of the present invention is designed for independently driving a pair of drive wheels on self-propelled vehicles such as walk behind mowers, snow blowers, floor cleaning machines, riding lawn mowers, zero turn radius vehicles, and the like. Accordingly, although the axle driving apparatus is discussed below with respect driving the drive wheels of a self-propelled walk behind mower, it will be understood that such apparatus can be used with various vehicles.

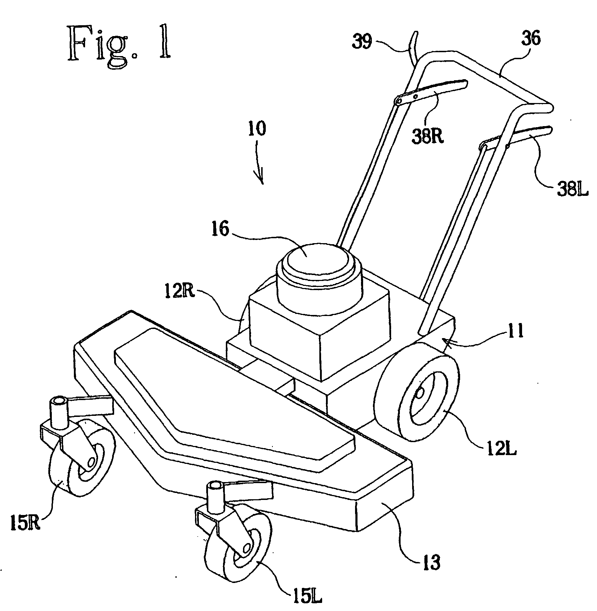

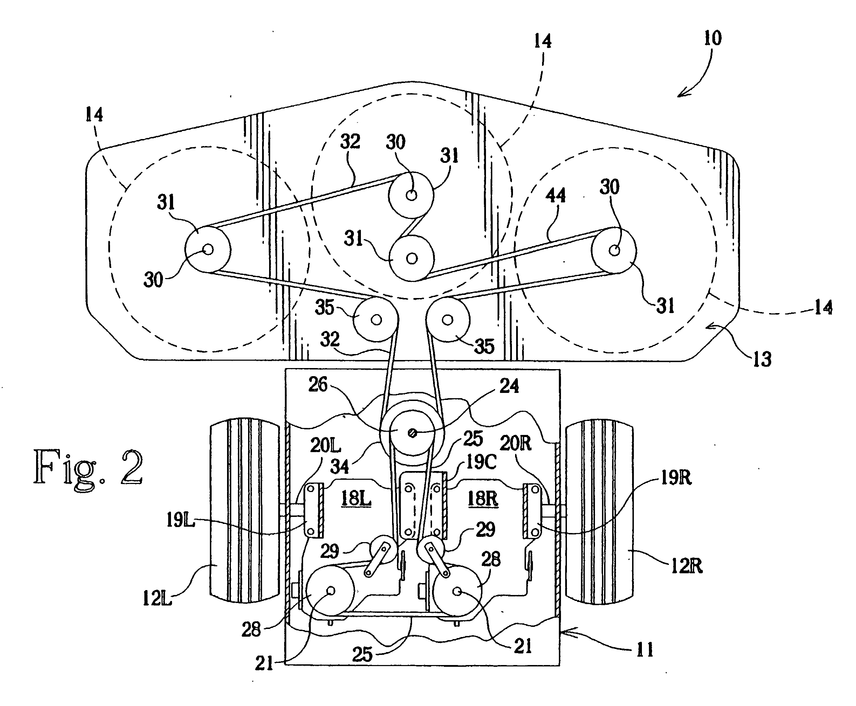

In **FIGS. 1** and **2,** a walk behind mower utilizing an axle driving apparatus of the present invention is illustrated generally at **10.** The mower **10** includes a body frame **11** movably supported by oppositely disposed drive wheels **12L** and **12R.** Secured to the forward portion of the body frame **11** is a mower deck **13** which is supported by a pair of caster wheels **15L** and **15R,** and on which are rotatably mounted a plurality of blade members **14** which are utilized for cutting grass and other vegetation.

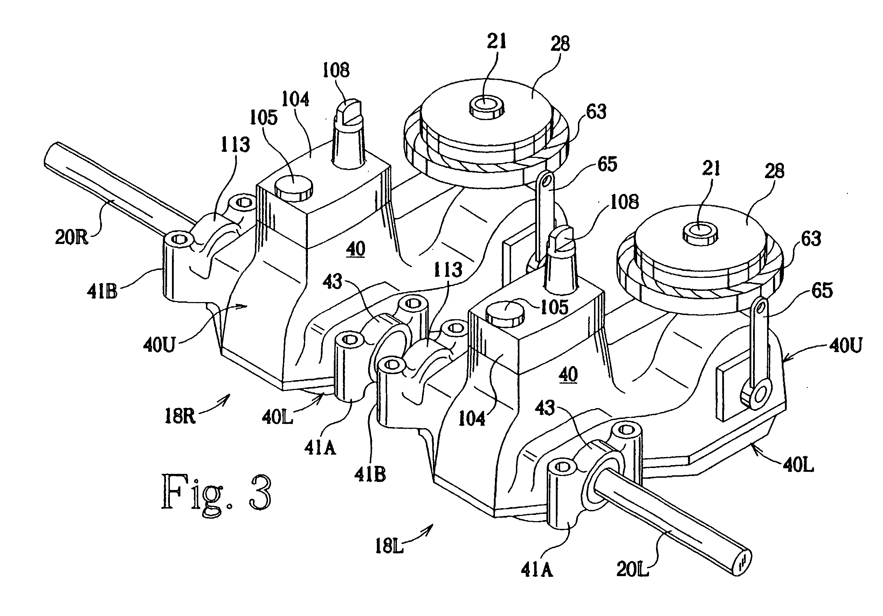

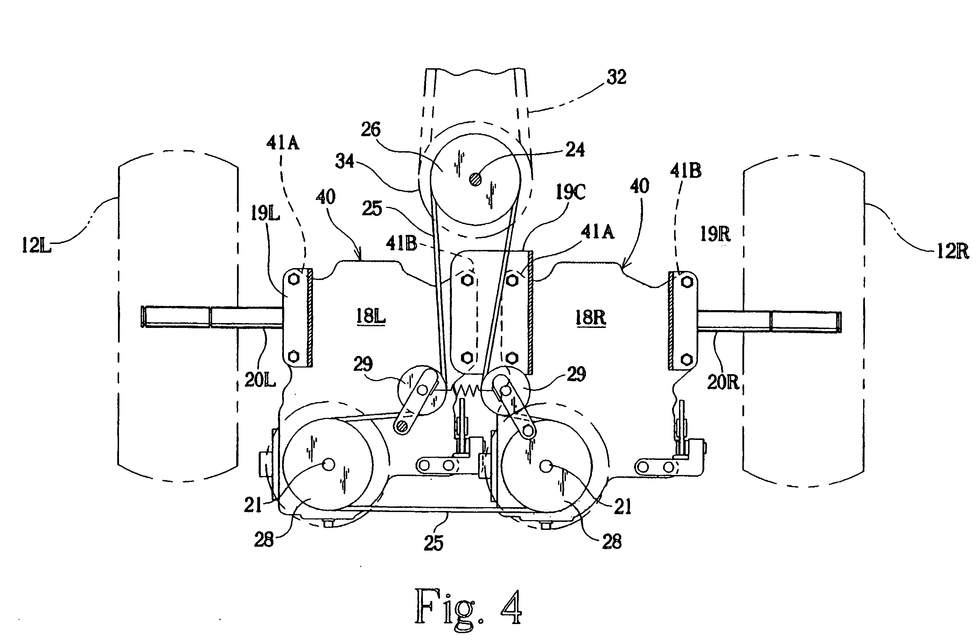

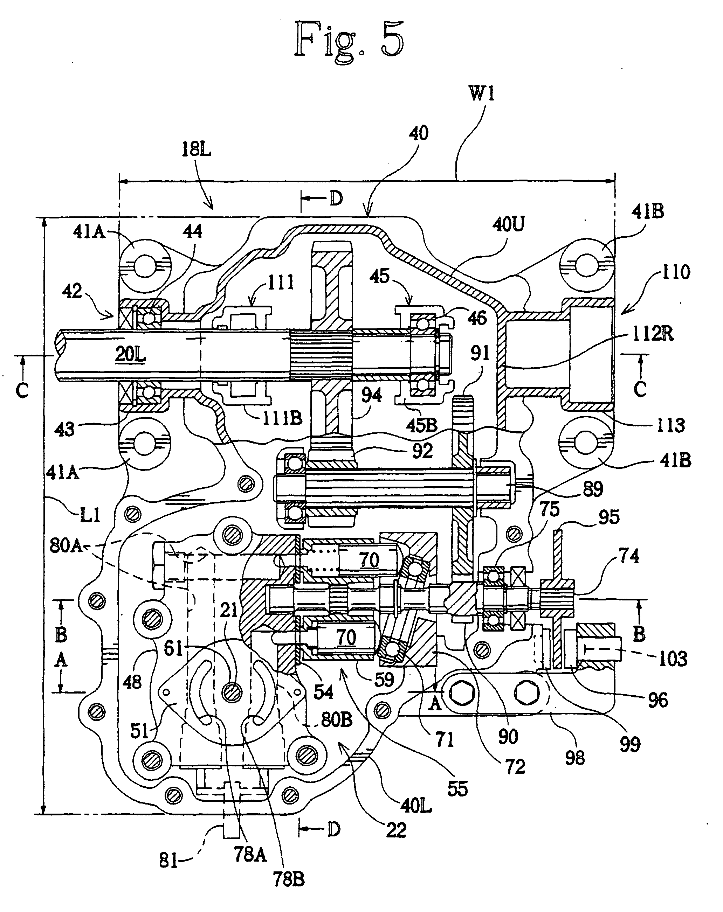

The drive wheels **12L** and **12R** are rotatably driven by a prime mover, such as the illustrated engine **16,** mounted on the body frame **11.** More specifically, and as best illustrated in **FIGS. 2-4,** the axle driving apparatus **10** includes adjacently disposed left and right axle driving units **18L** and **18R,** respectively, which are suspended from mounting members **19L, 19R,** and **19C** provided on the body frame **11.** The axle driving units **18L** and **18R** suppprt and selectively rotate the axles **20L** and **20R** on which the drive wheels **12L** and **12R** are carried. In this regard, each of the axle driving units **18L** and **18R** includes a speed change mechanism which is drivingly connected to the operatively associated axle **20L** or **20R** such that the rotational speed and direction of the drive wheels can be independently selected. As will be discussed in detail below, in the preferred embodiment the speed change mechanisms comprise hydraulic stepless speed change transmissions **22** (e.g. **FIG. 5).** Further, each of the units **18L** and **18R** includes an input shaft **21,** the rotation of which operatively drives the hydraulic transmission **22.** In the preferred embodiment, the input shafts **21** extend substantially vertically from enlarged portions of the housings of the axle driving units **18L** and **18R.** This vertical orientation is useful when the engine of the self-propelled vehicle has a vertically disposed crank shaft, as in the case of the illustrated mower **10.** Given the relative disposition of the input shafts **21** and the crank shaft **24** of the engine **16,** the shafts **21** can be drivingly connected to the crank shaft **24** by as single drive belt **25.**

In the preferred illustrated embodiment, the crank shaft **24** is provided with a drive pulley **26** about which the drive belt **25** is received, and each of the shafts **21** is provided with an input pulley **28** around which the drive belt **25** is received. Further, the belt is routed between a pair of tension pulleys **29** which are supported on the body frame **11.** Preferably, the drive pulley **26** and the input pulleys **28** are triangularly disposed in a common, substantially horizontal plane so as to make efficient use of the space within the body frame **11.** It will also be noted in this regard that the advantageous positioning of components within the axle driving units **18L** and **18R,** which will be discussed in detail below, allows the housings of the axle driving units to be reduced in height compared with conventional axle driving units. This reduction in height, together with the vertical disposition of the input shafts **21** and advantageous disposition of drive and input pulleys, allows the body frame **11,** and the engine **16** mounted therein, to be reduced in height and disposed in a lower position, thereby lowering the center of gravity of the mower **10** and improving roadability.

As illustrated in **FIG. 2,** the engine **16** also serves to rotatably drive the blade members **14.** In this regard, each of the blade members **14** is mounted on a shaft **30** provided with a pulley **31.** A drive belt **32** is received around a further drive pulley **34** mounted on the crank shaft **24** and around the pulleys **31** to effect rotation of the blade members **14.** Further, tensioning pulleys **35** are provided to maintain tension on the belt **32** during operation.

It will be recognized by those skilled in the art that the operator of the mower **10** walks behind the mower during operation, and a steering bar **36** is provided to facilitate the steering of the mower **10** during use. The mower **10** is moved in forward and reverse directions by rotating the drive wheels **12L** and **12R** at the same speed, and turns are accomplished by selectively rotating the drive wheels **12L** and **12R** at different speeds. As will become clear from the discussion below, the hydraulic transmissions **22** of the axle driving units **18L** and **18R** allow the speed and rotational direction of the drive wheels **12L** and **12R** to be independently altered such that both the speed and the direction of movement of the mower can be controlled. Accordingly, steering control levers **38L** and **38R** are mounted on the steering bar **36** and connected by suitable linkages to transmission control levers **65** (discussed below) on the axle driving units **18L** and **18R.** Further, an accelerator **39** is mounted on the steering bar **36** to control the operation of the engine **16.**

More specifically with respect to the axle driving apparatus of the present invention, **FIGS. 2-12** illustrate the construction of one preferred embodiment of the apparatus. As noted above, the apparatus of the present invention includes a pair of axle driving units **18L** and **18R** which are adjacently disposed, and it will be noted that in the preferred embodiment the units **18L** and **18R** are substantially identical except for the disposition of the operatively associated axles **20L** and **20R.** Accordingly, in discussing the Figures, components and features which are common to both axle driving units will be referenced with common reference numerals.

The axle driving unit **18L** includes a housing **40** comprising an upper half housing **40U** and a lower half housing **40L** joined to each other through a peripheral joint or junction surface. When the housing **40** is mounted in an operating position on the body frame **11** of the mower **10,** the joint surface is substantially horizontally disposed. As noted above, in the preferred embodiment of the present invention, the speed change mechanism comprises a hydraulic stepless speed change transmission **22.** Accordingly, the housing **40** is sealed such that lubricating oil can be charged into the housing and used as operating oil for the hydraulic transmission. It will also be noted that, in order to facilitate the mounting of the unit **18L** on the body frame **11,** the housing **40** defines a first mounting boss **41A** at a forward left portion of the housing **40** which releasably engages the left mounting member **19L** of the body frame **11.** The housing **40** further defines a second mounting boss **41B** at a forward right portion of the housing **40** which releasably engages the center mounting member **19C.**

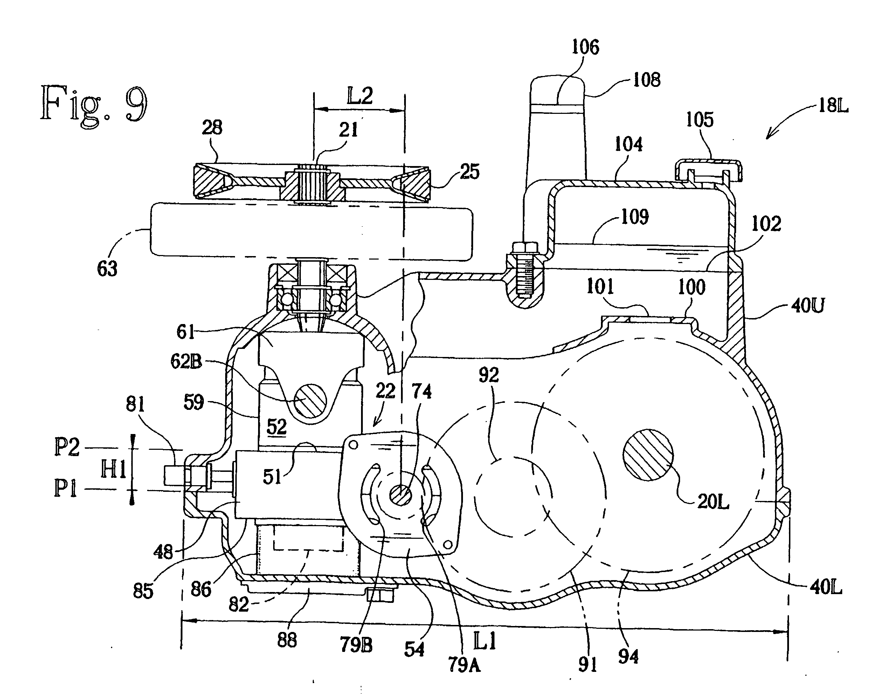

The axle **20L** of the axle driving unit **18L** projects from the left side of the housing, and driving wheel **12L** mounts at the distal end of the left axle **20L.** In order to rotatably support the axle **20L** in the housing **40,** the axle driving unit **18L** includes a first bearing support **42** including a hollow tube portion **43** defining a bearing seat for receiving a first roller bearing **44.** As best illustrated in **FIG. 5,** the first roller bearing **44** rotatably supports the axle **20L** proximate the point at which the axle projects from the housing **40.** In the illustrated embodiment, the first bearing support **42** is provided in the upper half housing **40U** such that the rotational axis of the axle **20L** is positioned in a horizontal plane disposed roughly midway along the vertical dimension of the housing **40.** This disposition of the axle **20L** results in a well balanced axle driving unit and, as illustrated in **FIG. 9,** allows the final gear **94** (discussed below) to be accommodated in the housing without providing an expanded region in the lower half housing which would reduce ground clearance. However, it is contemplated that the roller bearing support **42** can be cooperatively defined by the upper and lower half housings **40U** and **40L** where the joint surface between the upper and lower housings is alternatively disposed in a common plane with the rotational axis of the axle **20L,** or can be provided in the lower half housing **40L,** where the join surface is disposed in a plane above the rotational axis of the axle **20L.**

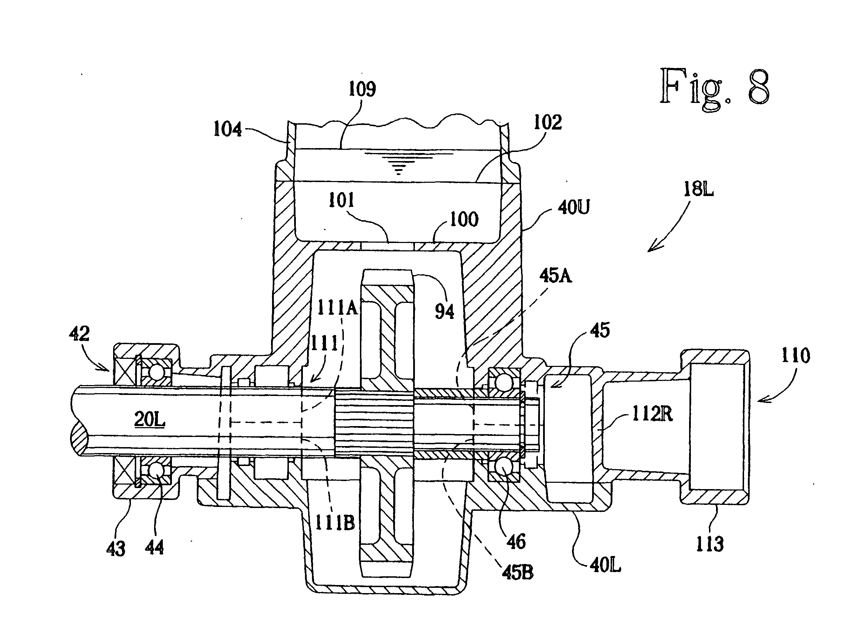

A second bearing support **45** is also provided which defines a bearing seat for receiving a second roller bearing **46.** As illustrated, the second roller bearing supports the proximal end of the axle **20L.** In the preferred embodiment, the second bearing support **45** comprises a first component **45A** provided on the upper half housing **40U,** and a second component **45B** provided on the lower half housing **40L** such that the components **45A** and **45B** cooperatively define the bearing seat for receiving the second roller bearing **46** (See **FIG. 8**).

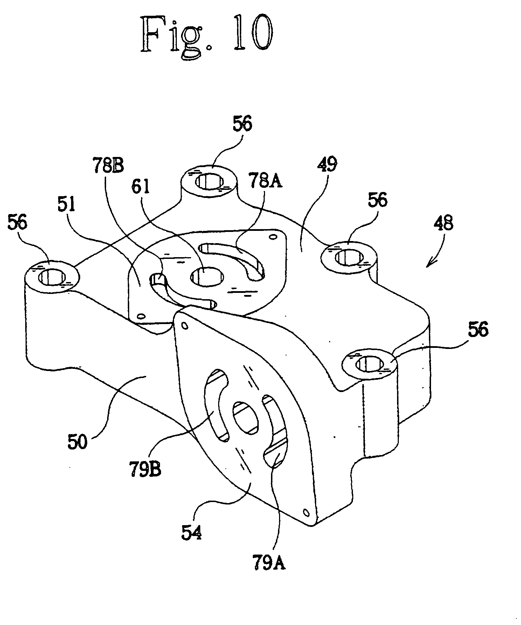

In order to accommodate the transmission **22,** the rear portions (portions toward the rear of the mower **10)** of upper and lower half housings **40U** and **40L** are enlarged in a direction perpendicular to the longitudinal axis of the axle **20L.** Therefore, the housing of the axle driving unit is longer (length **L**) than it is wide (width **W**; see **FIG. 5)** which facilitates the side-by-side mounting of the two axle driving units. The hydraulic stepless transmission **22** includes a center section **48** which is mounted in the enlarged region of the housing **40.** As shown in **FIG. 10,** the center section **48** is a single, elongated piece having an upper surface **49** and a side surface **50** which are adjacent and perpendicular to each other. A pump mounting surface **51** is defined at the rear portion (toward the rear of the mower **10)** of upper surface **49** for mounting thereon a hydraulic pump **52.** At the forward portion of side surface **50,** a motor mounting surface **54** is defined for mounting a hydraulic motor **55.** As shown in **FIG. 9,** the center of the motor mounting surface **54** extends in parallel to pump mounting surface **51** and is offset downwardly therefrom by a height **H1.** It will be recognized that by limiting this offset distance, the overall height of the enlarged region of the housing **40** can be limited. Further, the pump mounting surface **51** of the center section **48** extends horizontally with respect to the axle **20L,** and is rearwardly spaced from the axles which also facilitates the reduction of height of the housing **40.**

As shown in **FIG. 10,** housing mounting faces **56** are formed on the upper surface **49** of the center section **48** and are preferably disposed in common plane with the pump mounting surface **51.** Therefore, housing mounting faces **56** can be ground when the pump mounting surface **51** is ground so that the processing time for the center section **48** can be reduced. Bolt insertion bores are provided at the housing mounting faces **56,** and center section **48** is fixed to the inner wall of the enlarged region of upper half housing **40U** by connecting bolts inserted into the bores. Alternatively, the pump mounting surface **51** and the motor mounting surface **54** can be provided integral to the inner wall of the lower half housing **40L** by increasing the thickness of such inner wall in the enlarged region. However, it is preferable to use a center section **48** which is separate from the housing to facilitate processing of the housing, and to prevent oil from leaking out of the housing.

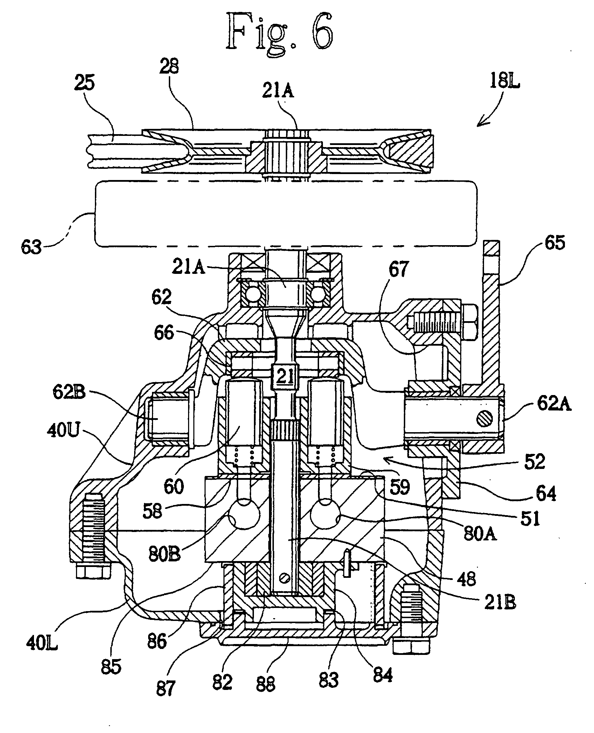

As illustrated in **FIG. 6, a** valve plate **58** is mounted onto pump mounting face **51** to accommodate the mounting of the hydraulic pump **52** of the hydraulic stepless transmission **22.** In the preferred illustrated embodiment, the pump **52** comprises an axial piston type variable displacement hydraulic pump. In this regard, the hydraulic pump **52** includes a cylinder block **59** rotatably disposed on the valve plate 58. Pistons **60** are fitted into a plurality of cylinder bores of cylinder block **59** for reciprocating movement in response to biasing springs. It will be recognized by those skilled in the art that rotation of the input shaft **21** serves to drive the hydraulic pump **52.** In this regard, the input shaft **21** engages with a spline bore provided on the rotational axis of cylinder block **59** such that the cylinder block **59** rotates with the input shaft **21.** The input shaft **21** is rotatably supported at its upper end portion by upper half housing **40U** and a distal end portion **21A** of the shaft **21** extends out of the housing **40.** The lower end portion **21B** of the input shaft **21** is received through a bore **61** provided in the center section **48** so as to be maintained in the proper axial alignment. One of the input pulleys **28** is secured to the upper end portion **21A** of the input shaft **21** and, as note above, the pulley **28** is selectively rotated by the drive belt **25.** It will also be noted that a cooling fan **63** is mounted on the input shaft **21** for cooling the axle drive unit during operation.

In the preferred illustrated embodiment, a trunnion-type movable swash plate **62** is provided for selectively varying the displacement of the hydraulic pump **52.** In this regard, the swash plate **62** includes a first trunnion shaft **62A** which is supported by a lid **64** mounted over an opening **67** in the upper half housing **40U,** and includes a further trunnion shaft **62B** which is supported by a bearing bore provided at the inner wall of upper half housing **40U** (See **FIG. 6).** The trunnion shaft **62A** projects outwardly from the lid **64** and a speed control lever **65** is mounted on the projection. Accordingly, selected rotation of the control lever **65** pivots the swash plate **62** on the common rotational axis of the trunnion shafts **62A** and **62B.** An opening is provided in the swash plate **62** to accommodate the input shaft **21,** and the swash plate **62** is movably disposed such that the heads of the pistons **60** abut against a thrust bearing **66** of the swash plate **62.** Accordingly, pivotal movement of the swash plate **62** alters the angular disposition of the thrust bearing **66** as it engages the pistons **60,** thereby allowing alteration of the discharge direction and discharge rate of the hydraulic pump **52.**

It will be understood that whereas an axial piston type variable displacement hydraulic pump is illustrated in the Figures and has been described above, a radial piston type hydraulic pump or a gear type pump may be interchangeably used. Further, whereas in the embodiment of **FIGS. 2-12** the pump **52** incorporates a trunnion-type swash plate, it will be understood by those skilled in the art that a cradle-type swash plate can be interchangeably used.

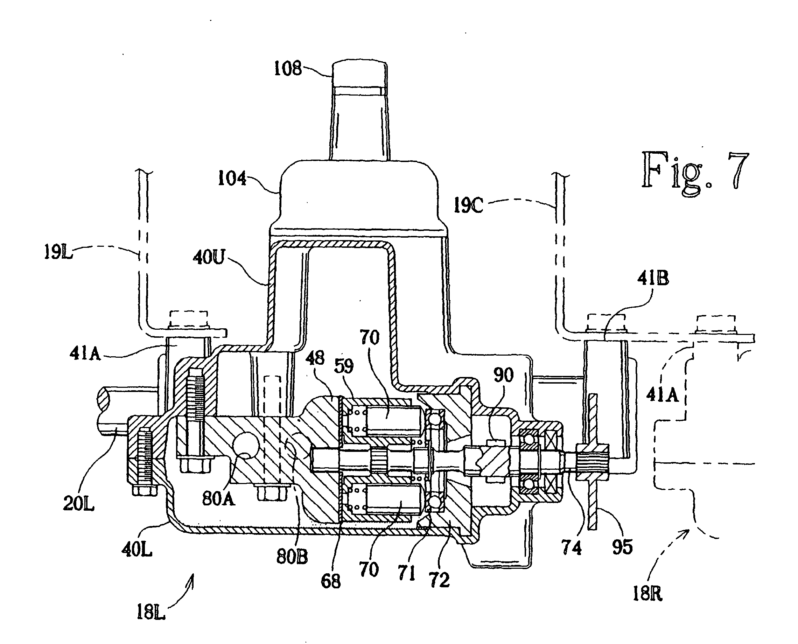

In the preferred illustrated embodiment, the hydraulic motor **55** comprises an axial-piston type fixed displacement hydraulic motor. As best illustrated in **FIGS. 5** and **7,** a valve plate **68** is mounted on the motor mounting surface **54** of the center section **48,** and the hydraulic motor **55** includes a cylinder block **69** which is rotatably disposed on the plate **68.** A plurality of pistons **70** are fitted for reciprocating movement into a plurality of cylinder bores defined in the cylinder block **69.** The heads of pistons **70** abut against a thrust bearing **71** of a fixed swash plate **72** disposed between upper half housing **40U** and lower half housing **40L.** An input or motor shaft **74** engages a spline bore provided on the rotational axis of cylinder block **69** such that the motor shaft **74** rotates with the cylinder block **69.**

The rotational axis of cylinder block **69** is preferably positioned in the same plane as the joint surface of the upper and lower half housings to facilitate the rotational mounting of the motor shaft **74.** In this regard, one end of motor shaft **24** is supported by a bearing **75** which is sandwiched between the upper half housing **40U** and the lower half housing **40L,** and the other end of the shaft **74** is received by, and supported in, a receptor **76** provided in the center section **48.** It will be noted that, when the hydraulic pump and the hydraulic motor are disposed on the center section **48** described above, input shaft **21** and motor shaft **74** are perpendicular to each other, and the input shaft **21** is offset from the motor shaft **74** by a length **L2** (see **FIG. 9)** in the direction apart from the axle **20L.**

As shown in **FIGS. 5, 9,** and **10,** a pair of kidney-shaped ports **78A** and **78B** is open on pump mounting face **51** of the center section **48** to take in or discharge oil in cylinder block **59.** Further, a pair of kidney-shaped ports **79A** and **79B** is open on motor mounting face **54** to take in or discharge oil in cylinder block **69.** In order to establish fluid communication between the port **78A** and the port **79A,** a first oil passage **80A** is provided in the center section **48,** and in order to establish fluid communication between the port **78B** and the port **79B,** a second oil passage **80B** is provided in the center section **48.** Accordingly, a closed circuit is defined to circulate the operating oil between the hydraulic pump and hydraulic motor. It will also be noted that a check valve means is provided which includes a check valve (not shown) disposed in each of the passages **80A** and **80B.** The check valve means selectively places the passages **80A** and **80B** in fluid communication with each other, thereby enabling the hydraulic motor to idle. A push rod **81** which projects from the upper half housing **40U** is provided for manually actuating the check valves.

It will be recognized from the above that the hydraulic pump **52** and hydraulic motor **55,** which are placed in closed circuit fluid communication by the advantageously configured center section **48,** provide a hydraulic stepless speed change transmission. In this regard, the rotation of the input shaft **21** drives pump **52,** and by selective altering the discharge direction and discharge rate of the pump **52** through manipulation of the speed control lever **65,** the hydraulic motor produces stepless output rotation of the motor shaft **74.**

In order to facilitate the operation of the transmission, operating oil supply means is provided for replenishing oil that has leaked out from the center section **48.** The supply means may be the hydraulic pump itself, or, as in the preferred illustrated embodiment, a charge pump **82** can be provided. The charge pump **82,** as shown in **FIG. 6,** is a trochoid pump which is contained in a charge pump casing **84** biased toward a charge pump mounting surface **85** on the lower surface of center section **48** by a spring member **83,** with the spring member **83** being used for adjusting the discharge oil pressure of the charge pump **82.** The charge pump **82** is driven by the input shaft **21** and is in fluid communication with the oil passages **80A** and **80B** through a pair of check valves (not shown). As will be appreciated by those skilled in the art, when operating oil leaks from the closed circuit defined by the transmission **22,** the charge pump **81** serves to draw lubricating oil in the housing **40,** in through an oil filter **86,** and communicate the oil to the oil passages **80A** and **80B** in response to the drop in oil pressure in such passages. It will also be noted that the lower half housing **40L** is provided with an opening **87** releasably covered by a lid **88** to facilitate maintenance of the oil filter **86.**

As illustrated in **FIGS. 5** and **9,** the motor shaft **74** is disposed in parallel to the axle **20L,** which simplifies the transmission of drive force from the motor shaft **74** to the axle **20L.** In this regard, in order to communicate the rotation of the motor shaft **74** to the axle **20L,** a counter shaft **89** is provided between the axle **20L** and the motor shaft **74** which extends parallel to the axle and motor shaft. A gear **90** is provided on motor shaft **74** which engages with a larger diameter gear **91** mounted on the counter shaft **89.** A smaller diameter gear **92** on the counter shaft **89,** in turn, engages with a final gear **94** mounted on the axle **20L.** As illustrated in **FIG. 9,** the counter shaft **89** is preferably positioned in a first plane **P1** which corresponds to the plane of the joint surface of the housing **40**. This allows the axial ends of the counter shaft **89** to be supported by a pair of bearings interposed between the upper and lower half housings **40U** and **40L** (See **FIG. 5).** It will be understood that the axle **20L** can also be disposed in the same plane **P1** such that the bearing **44** which rotatably supports the axle **20L** can be mounted between the upper and lower half housings **40U** and **40L.** However, as noted above, disposing the axle **20L** on the plane **P1** would require expansion of the lower half housing **40L** to accommodate the lower position of the final gear **94,** thereby undesirably increasing the height of the housing **40** and decreasing ground clearance. Accordingly, in the illustrated embodiment, the axle **20L** is disposed above the plane **P1** to minimize the height of the housing **40.**

In **FIG. 5** a braking mechanism for selectively braking the motor shaft **74** is also illustrated. The braking mechanism includes a brake friction plate **95** fixed on the motor shaft **74** so as to rotate with the shaft **74.** Also, a pressure member **96** is provided at one end of a support member **98,** with the support member **98,** in turn, being linked to an operating lever (not shown) for actuating the brake. When the operating lever is actuated, a cam mechanism **103** causes the pressure member **96** to be placed in press contact with the braking friction plate **95** such that the plate **95** is clamped between the pressure member **96** and a stationary braking plate **99** mounted on the housing **40,** thereby enabling the motor shaft **74** to be braked. However, the illustrated braking mechanism is merely illustrative of one suitable braking mechanisms, and other suitable mechanisms can be used if desired.

As shown in **FIG. 9,** in the preferred embodiment a partition **100** for covering an upper portion of the final gear **94** is integrally formed in upper half housing **40U** and an oil flow-through ventilation bore **101** is formed in the partition **100.** An opening **102** is formed at a portion of the upper wall of upper half housing **40U** positioned above the partition **100,** and covered with a cover member **104.** Cover member **104** is provided with a breather **105** and an oil supply opening **106** releasably covered by an oil supply lid **108.** A predetermined amount of oil is charged into the housing **40** so that the boundary plane of the oil is disposed approximately as referenced at **109** in **FIG. 9.** Air mixed in the oil when charged into the housing is collected in an air reservoir in the cover member **104** through ventilation bore **101.** Partition **100** is filled at the lower portion with oil, so that, even when the various gears rotate, the air in the air reservoir is scarcely mixed with oil. When the axle driving unit is operated for a long time, the oil volume expands. The volume of air in the air reservoir decreases to accommodate the expanded volume of oil.

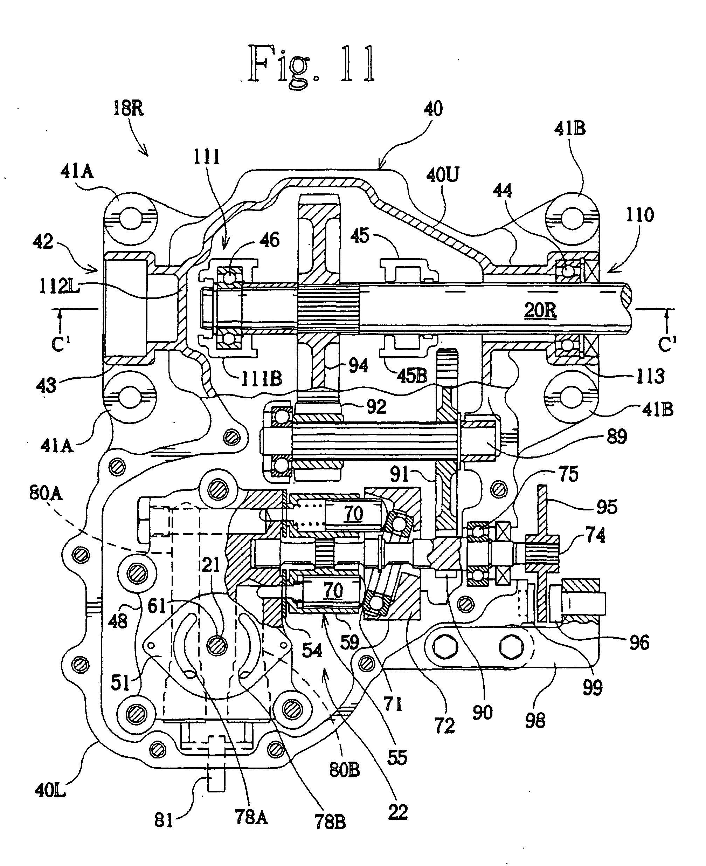

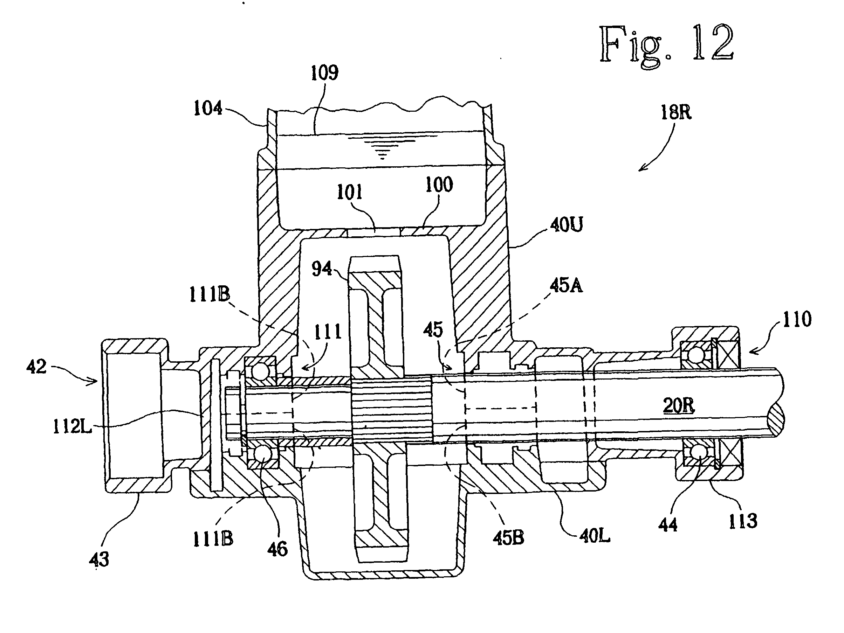

In **FIGS. 11** and **12,** the right side axle driving unit **18R** is shown. As indicated above, the left and right side axle driving units **18R** and **18L** are substantially identical in the preferred embodiment except for the disposition of the operatively associated axle. Therefore, components and features of the unit **18R** which are common to the unit **18L** discussed above will be referenced by common reference numerals.

As illustrated, in the right side axle driving unit **18R,** the axle **20R** projects from the right side of the housing, and drive wheel **12R** mounts at the distal end of the right axle **20R.** In order to rotatably support the axle **20R** in the housing **40,** the axle driving unit **18R** is provided with a third bearing support **110** including a hollow tube portion **113** defining a bearing seat for receiving the first roller bearing **44.** The first roller bearing **44** rotatably supports the axle **20R** proximate the point at which the axle projects from the housing **40.** In the illustrated embodiment, the third bearing support **110** is provided in the upper half housing **40U,** but it is contemplated that the roller bearing support **110** can be cooperatively defined by the upper and lower half housings **40U** and **40L** where the joint surface between the upper and lower half housings is alternatively disposed in a common plane with the rotational axis of the axle **20R,** or can be provided in the lower half housing **40L** where the joint surface is disposed in a plane above the rotational axis of the axle **20R.** A fourth bearing support **111** is also provided which defines a bearing seat for receiving the second roller bearing **46.** As illustrated, the second roller bearing **46** supports the proximal end of the axle **20R.** In the preferred embodiment, the fourth bearing support **111** comprises a first component **111A** provided on the upper half housing **40U,** and a second component **111B** provided on the lower half housing **40L** such that the components **111A** and **111B** cooperatively define the bearing seat for receiving the second roller bearing **46** (See **FIG. 12).**

As **FIGS. 5, 8, 11** and **12** illustrate, in the preferred embodiment of the present invention the housing **40** is constructed so as to integrally provide the first and second bearing supports **42** and **45** necessary for the mounting of the left axle **20L** and the third and fourth bearing supports **110** and **111** necessary for mounting the right axle **20R.** Depending upon whether the housing **40** is to be used for a left side axle driving unit **18L** or a right side axle driving unit **18R,** either partitioning wall portion **112L** or **112R** is removed to accommodate the axle **20L** or **20R.** Alternatively, the housing **40** can be manufactured without the partitioning wall portions **112L** and **112R,** and a separate seal member can be used to seal the unused opening in the housing **40.**

In light of the above, it will be appreciated that the axle driving apparatus of the present invention provides an axle driving unit which can be used as either the left or right side axle driving unit without substantial modifications to either the housing **40** or the internal components of the units. This advantageous construction obviates the need to construct dedicated left and right side housings, thereby greatly decreasing manufacturing costs. Moreover, the advantageous placement and construction of the center section **48,** allows the housing **40** to be greatly reduced in height and width when compared to conventional axle driving units. Accordingly, the axle driving apparatus can be used on small mowers or other small vehicles, and allows the vehicles to define lower centers of gravity so as to improve roadability.

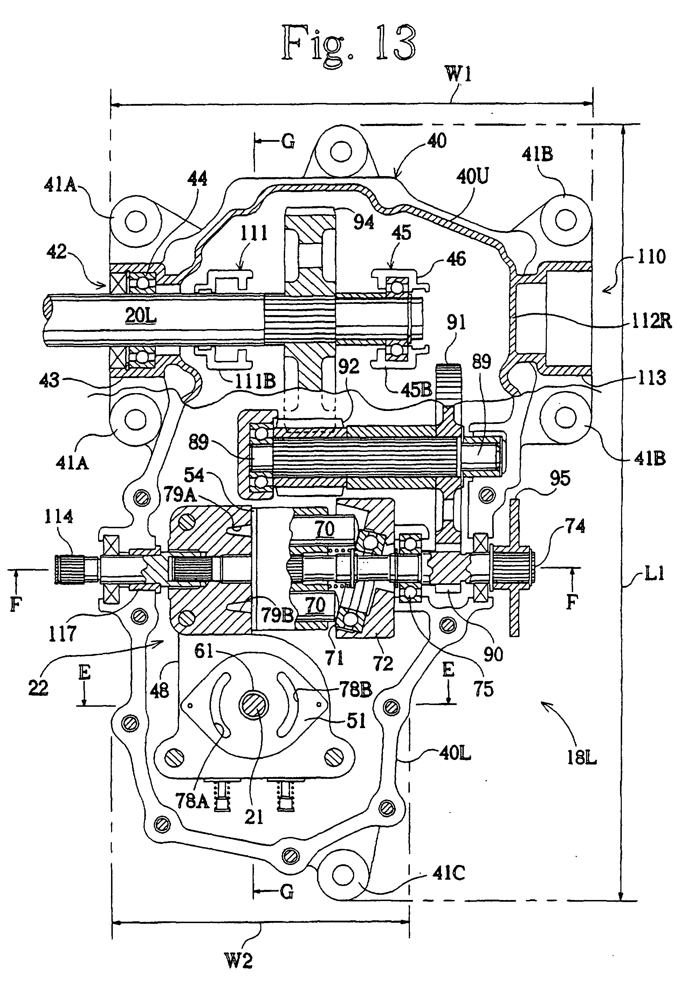

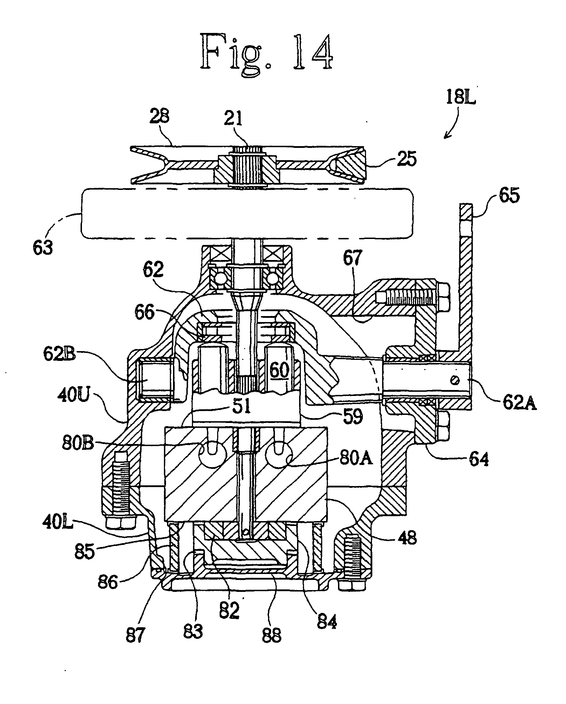

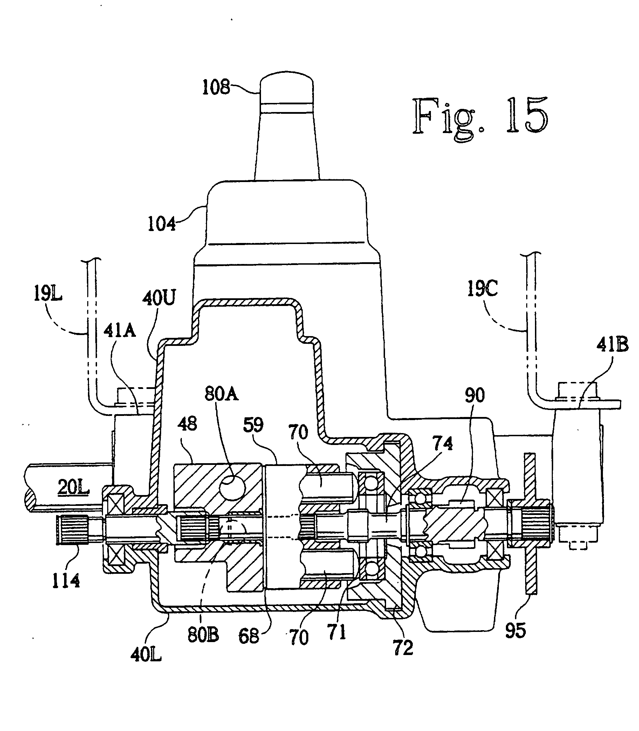

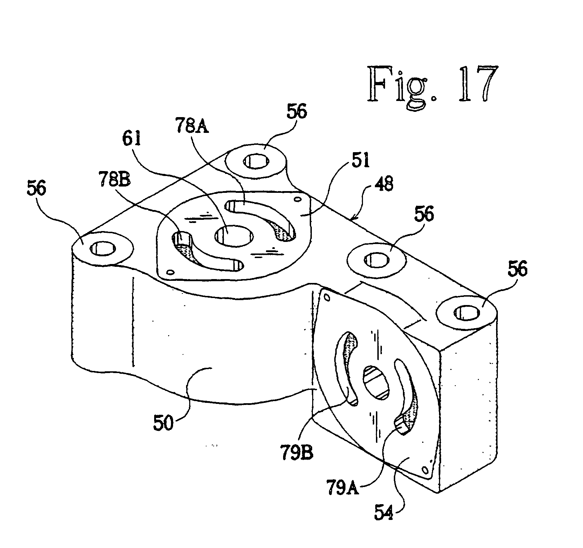

In **FIGS. 13-17,** an alternate embodiment of the axle driving units of the present invention is illustrated. This second embodiment is similar in construction to the first embodiment described above so that the same parts are designated with the same reference numerals and the description of common features and components is omitted. Accordingly, only two points of different construction will be described. Further, in **FIGS. 13-17** only the left axle drive unit **18L** is illustrated, but it will be understood that in the preferred embodiment the right axle drive unit **18R** is substantially identical to the drive unit **18L** except for the disposition of the operatively associated axle.

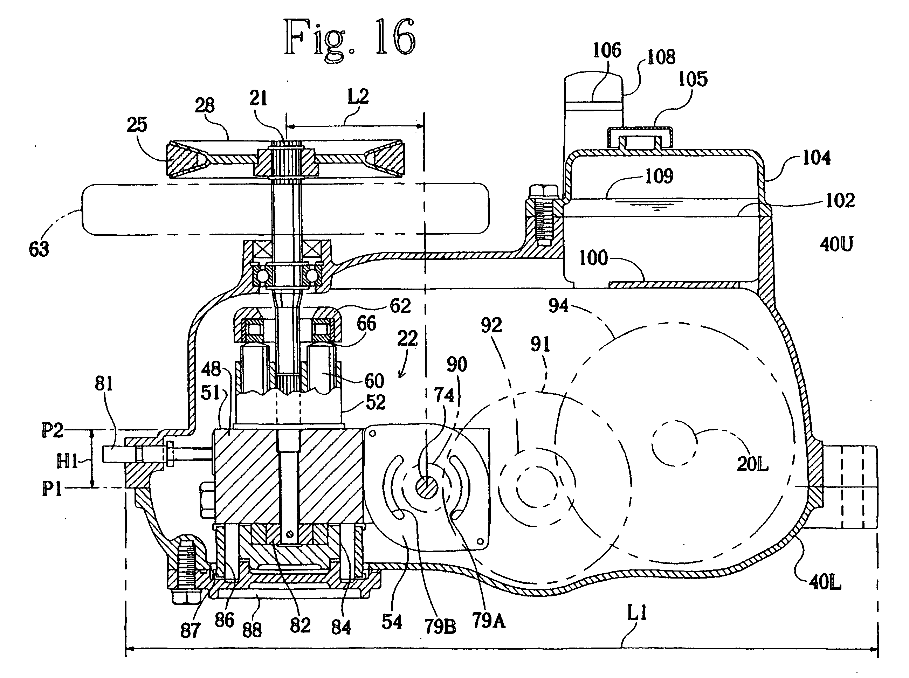

With respect to the first difference in construction, in many small mower and small vehicle applications it is advantageous for the axle drive units **18L** and **18R** to be as narrow in width as possible since available mounting space on the body frame may be limited. Therefore, in the second embodiment the enlarged region of the housing **40** is elongated, and the configuration of the center section **48** defines an alternative configuration which is efficiently accommodated in the modified enlarged region. In this regard, the pump mounting face 51 and motor mounting surface **54,** formed on upper surface **49** and side surface **50,** respectively, are formed so that motor mounting surface **54** laterally overlaps pump mounting surface **51** by a length **L2.** Thus, the length **L2** from input shaft **21** to motor shaft **74** is larger in this embodiment (see **FIG. 16)** than in the first embodiment (see **FIG. 9)** and the cylinder block **59** of the hydraulic pump is disposed further away from the axle **20L** than in the first embodiment. As a result of this alternative construction, the center section **48** can be contained in a narrower enlarged region having a width **W2** (see **FIG. 13)** thereby consuming less lateral space within the body frame **11.**

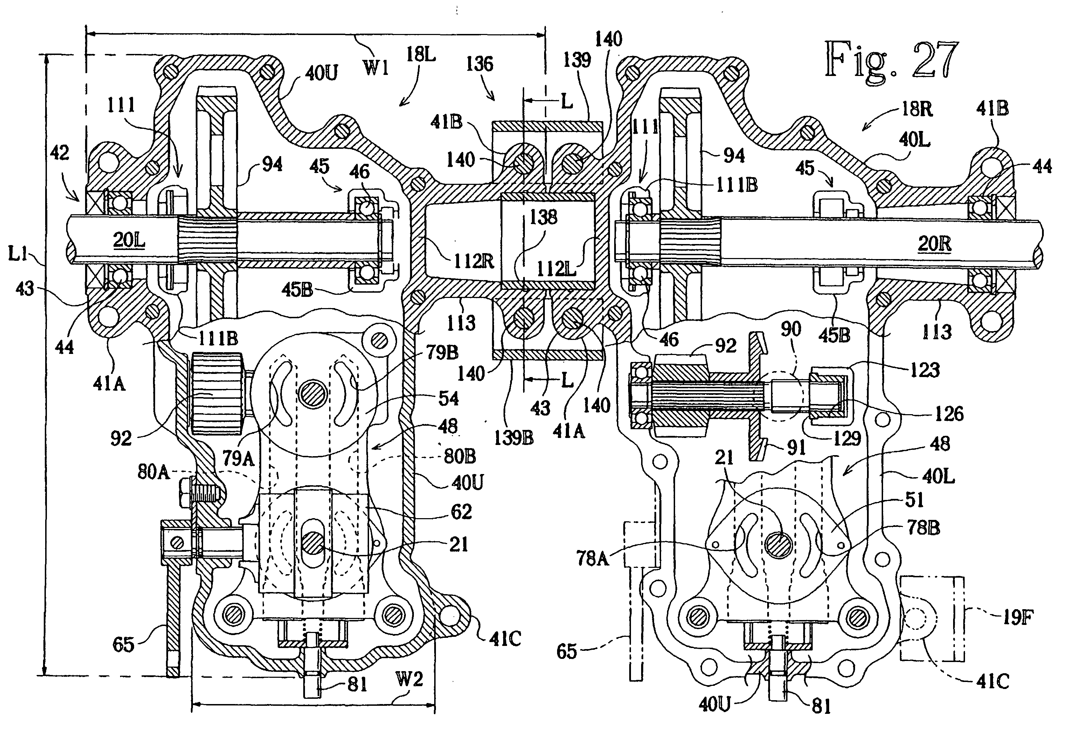

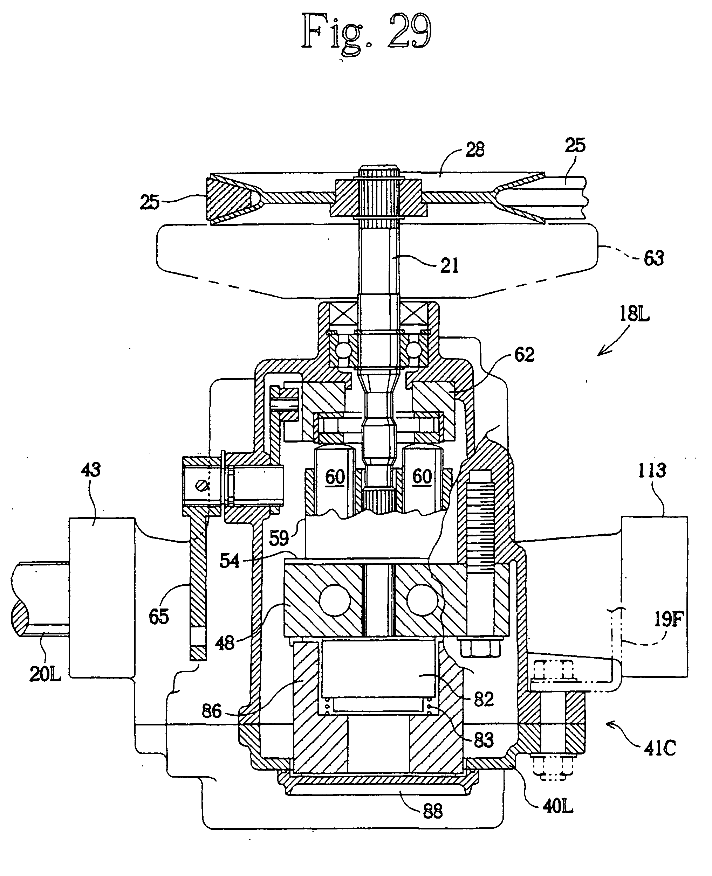

It will also be noted that the housing **40** of this second embodiment is preferably provided with a further mounting boss **41C** at the utmost end of the enlarged region of the housing. Mounting boss **41C** is connected to a further mounting member **19F** provided on the body frame **11** (E.g. see **FIGS. 27** and **29).** Given the increased length **L1** of the housing of the second embodiment, this further mounting boss **41C** facilitates the stable mounting of the axle driving unit on the body frame **11.**

A second difference is with respect to the motor shaft **74.** As in the first embodiment, brake friction plate **95** is disposed on one end of the motor shaft **74** that extends outwardly from the housing. The difference in this embodiment is that the other end of motor shaft **74** is provided with a spline, and it extends into a through-open bore provided at the center of motor mounting surface **54.** A bushing **117** is interposed between the joint surfaces of the housing to support a rotary shaft **114** (see **FIG. 13).** The spline end of motor shaft **74** is spline-engaged with one end of the rotary shaft **114** so that the driving force of motor shaft **74** is taken out of the housing through rotary shaft **114.**

In the preferred embodiment, the outer end of rotary shaft **114** is an indented spline. The braking friction plate **95** can be mounted on this end of the rotary shaft **114,** or the rotary shaft **114** can be used as a power take-out shaft. If such construction is not required, rotary shaft **114** can be removed and the bore formed at the joint surfaces of the housing can be closed by a seal cap.

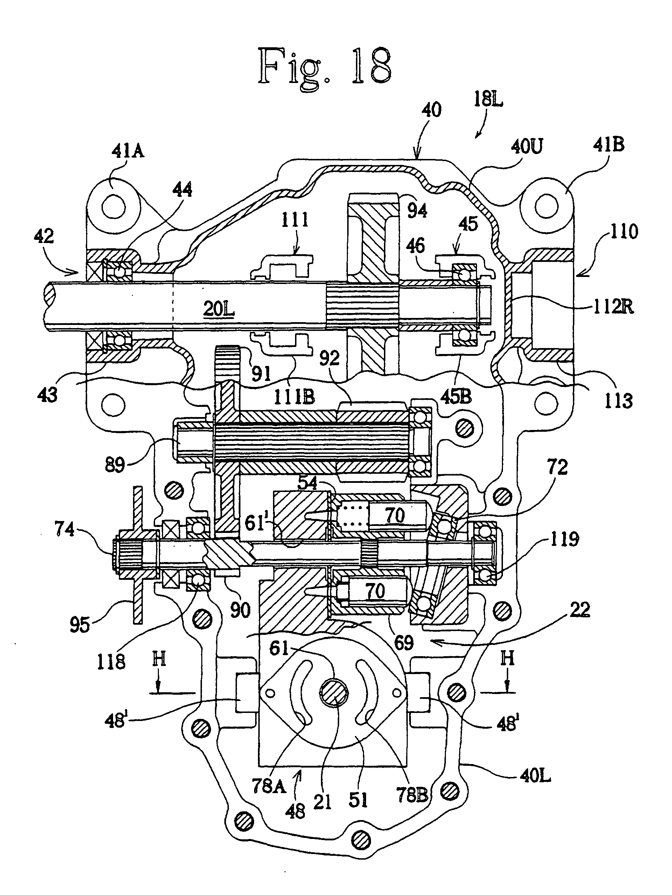

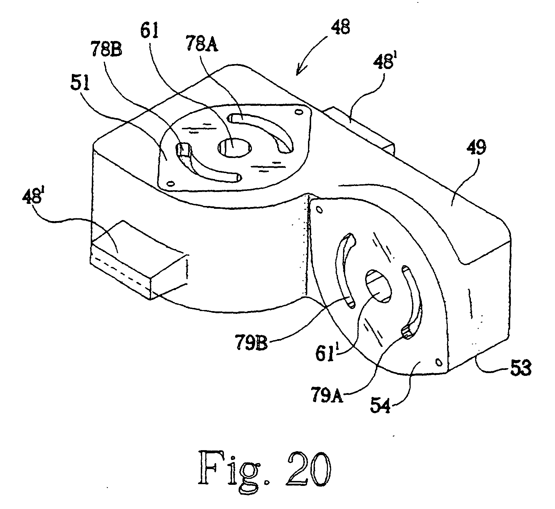

A third embodiment of the axle driving units of the present invention is illustrated in **FIGS. 18-20.** It will be noted that the construction of this third embodiment is similar to that of the second embodiment described above. However, in the third embodiment, the center section **48** is not connected to upper half housing **40U** by bolts, but inserted in part between upper half housing **40U** and lower half housing **40L.** Therefore, center section **48** is positioned in the enlarged region in a free-standing state. In this regard, housing mounting faces **48** project from the left and right side surfaces of center section **48.** Further, the upper surface **49** of the center section **48** and the lower surface **53** opposite thereto form housing mounting faces. Since the center section **48** is free-standing, bolts are not required such that assembly is simplified and manufacturing cost is lowered.

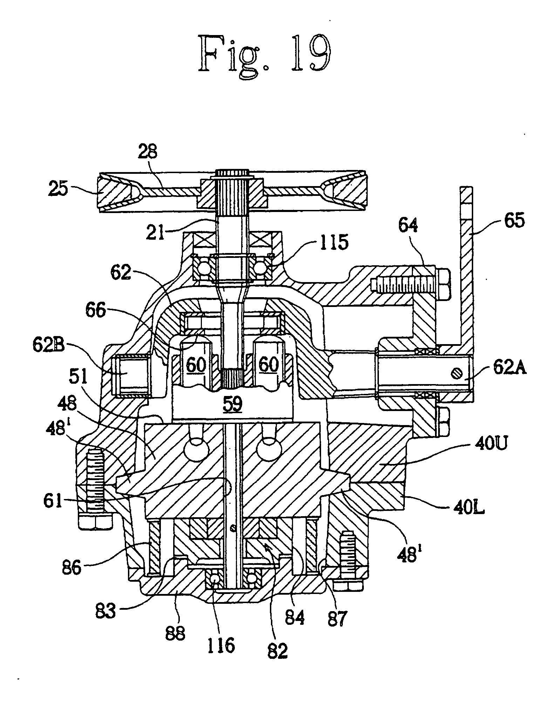

In order for center section **48** of the third embodiment to be free-standing, input shaft **21** and motor shaft **74** are completely supported by the housing **40.** Upper end of input shaft **21** is supported by a bearing **115** attached to the upper half housing **40U,** and the lower end of the input shaft **21** passes through the bore **61** in center section **48** and is supported by a bearing **116** mounted in the lid **88** of the lower half housing **40L** (see **FIG. 19).** Motor shaft **74** passes through a bore **61'** in the center section **48** and the opposite ends are supported by bearings **118** and **119** (see **FIG. 18).**

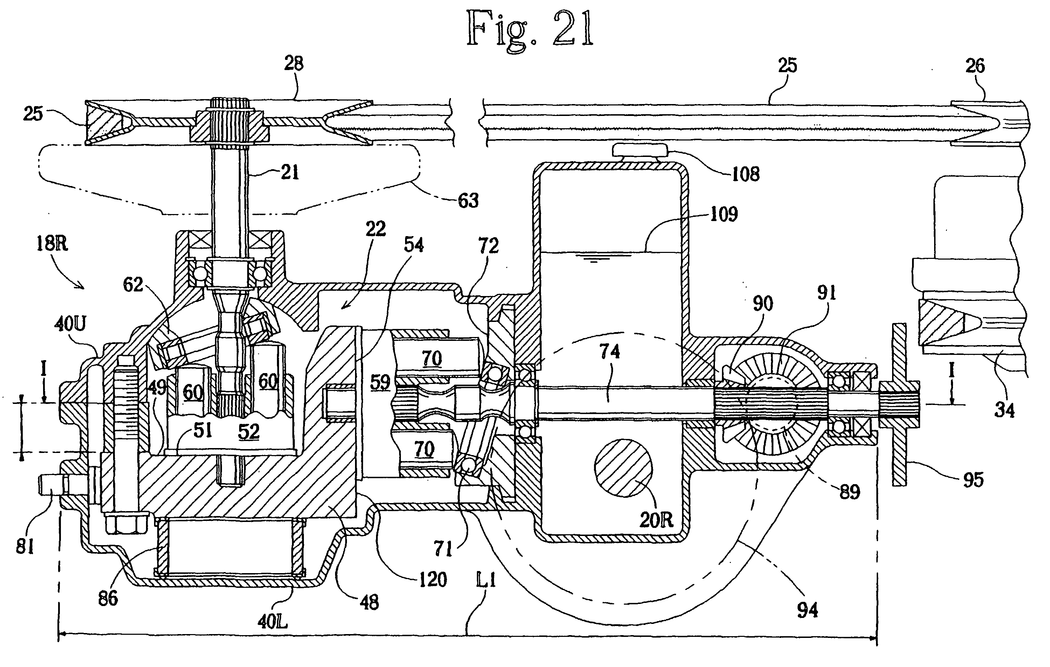

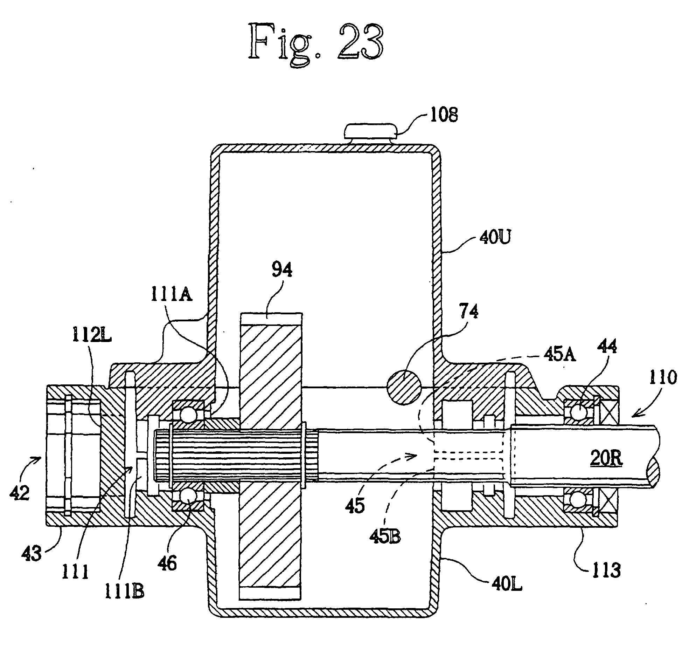

In **FIGS. 21-23,** a fourth embodiment of the axle driving units of the present invention is illustrated. In this embodiment a center section **48** of substantially L-like shape in sectional side view is disposed in an elongated enlarged region extending across upper half housing **40U** and lower half housing **40L,** and is fixed to upper half housing **40U.** The pump mounting surface **51** is formed on a substantially horizontal upper surface **49,** and the motor mounting surface **54** is formed on a substantially vertical end surface **120** of center section **48.** Pump mounting surface **51** is positioned apart from axle **20R,** and motor mounting surface **54** is positioned near the axle **20L.** The input shaft **21** extends substantially vertically and substantially perpendicular to the axle **20R,** and motor shaft **74** extends substantially horizontally and substantially perpendicular to axle **20R.** It will also be recognized by those skilled in the art that in this fourth embodiment, the movable swash plate **62** is a cradle-type rather than the trunnion-type swash plate of the above-described embodiments. However, it will be understood that cradle-type and trunnion-type swash plates can be interchangeably used in any of the embodiments discussed herein.

In the fourth embodiment, an oil filter **86** is interposed between the lower surface of center section **48,** opposite to the pump mounting surface **51,** and the inner surface of the bottom wall of lower half housing **40L.** Oil in the housing **40** is filtered by the oil filter **86** and guided to a supply port (not shown) open at the lower surface of center section **48.**

Preferably, the axis of the motor shaft **74** of the fourth embodiment is positioned in the same plane as the joint surface of the housing such that the motor shaft **74** is rotatably supported by bearings interposed between the upper half housing **40U** and the lower half housing **40L.** Further, unlike earlier described embodiments, the axle **20R** is disposed in the lower half housing **40L.** Motor shaft **74** is substantially rectangular to the axle **20R,** and passes above the axle **20R.** The utmost end of the motor shaft **74** projects from the housing, and a brake friction plate **95** is mounted thereon.

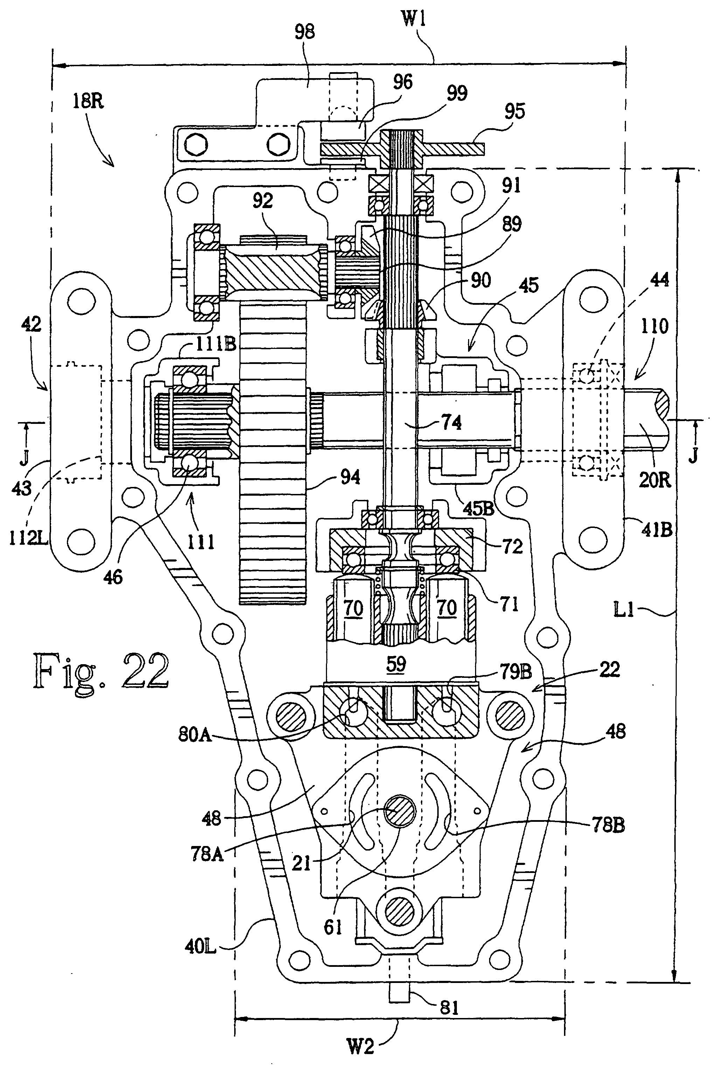

As best illustrated in **FIG. 22,** the counter shaft **89** extends parallel to the axle **20R** and is substantially perpendicular to the motor shaft **74.** Preferably the counter shaft **89** is positioned in the same plane as the joint surface of the housing such that it can be rotatably supported by bearings sandwiched between the upper half housing **40U** and the lower half housing **40L.** Since the motor shaft **74** and the counter shaft **89** are substantially perpendicular to each other, the gear **90** mounted on the motor shaft **74** and the gear **91** of the counter shaft **89** comprise bevel gears. Accordingly, driving force is transmitted from the motor shaft **74** to the counter shaft **89** by bevel gears **90** and **91,** and driving force is transmitted from the counter shaft **89** to the axle **20R** through gears **92** and **94.**

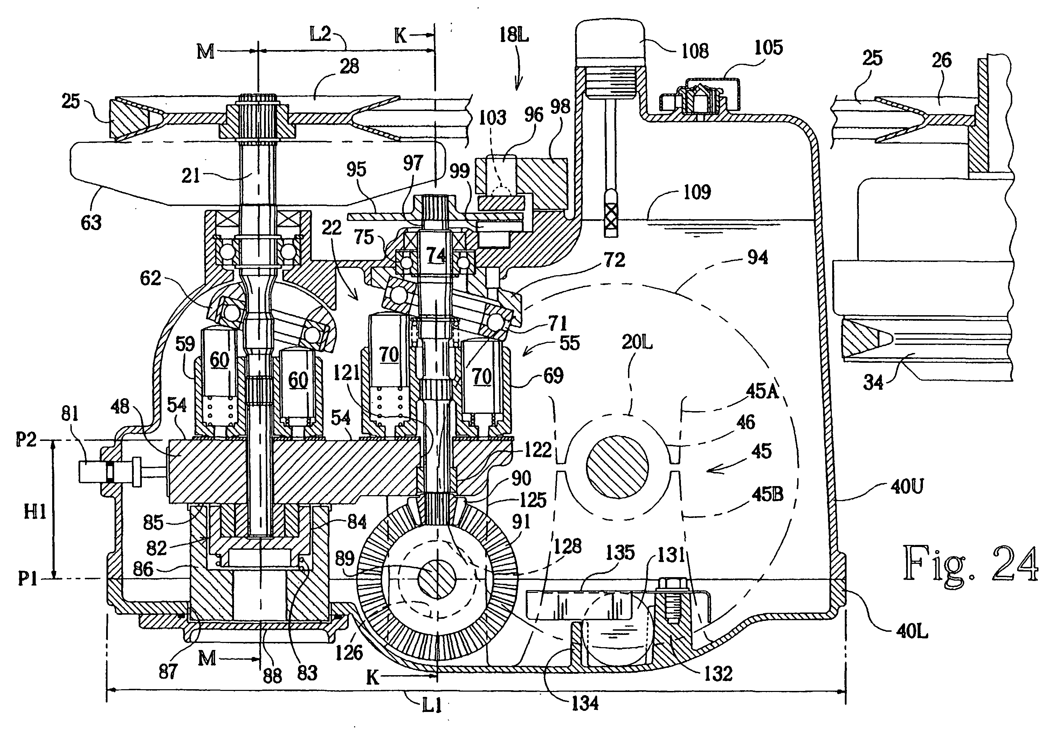

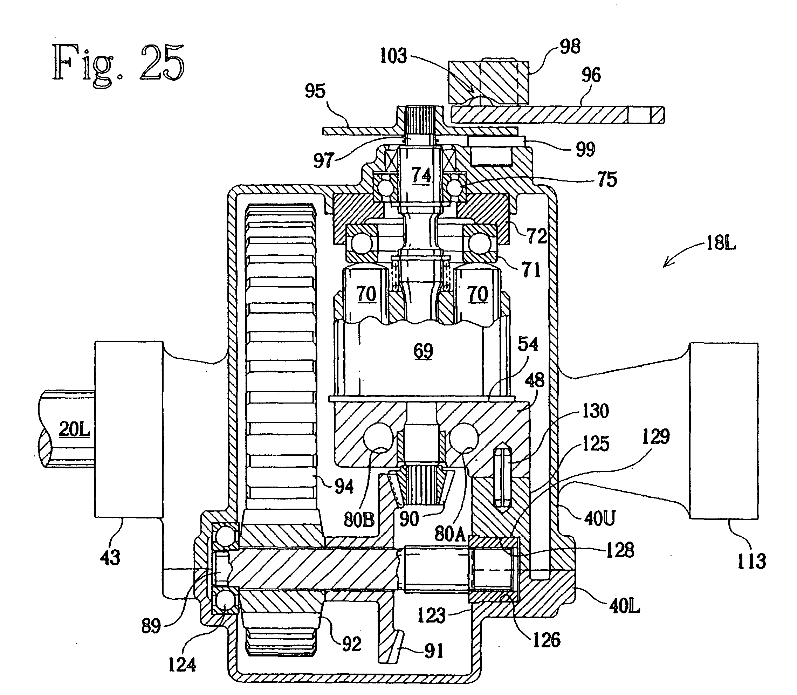

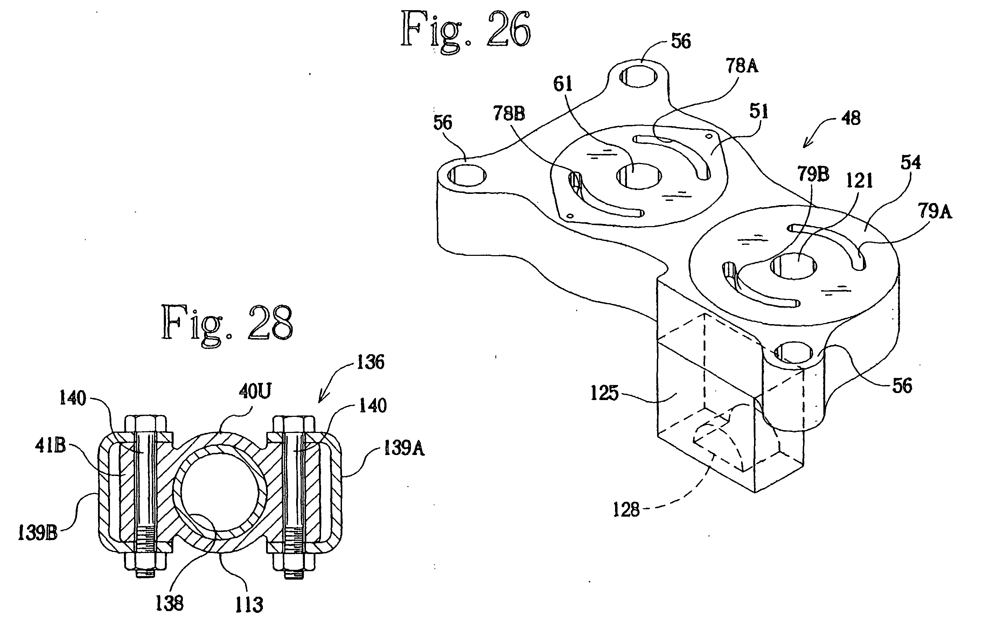

A fifth embodiment of the axle driving units of the present invention is illustrated in **FIGS. 24-28.** In this embodiment, the center section **48** is disposed in the elongated enlarged region of the housing in a substantially horizontal orientation. Both the pump mounting surface **51** and the motor mounting surface **54** are formed on the upper surface **49** of the center section **48** with the motor mounting surface **54** being disposed nearest to the axle **20L.** The input shaft **21** and motor shaft **74** extend in parallel to each other, and are substantially vertically disposed and at substantially right angles to the axle **20L.** It will be recognized that in embodiments where the motor shaft **74** is horizontally oriented, the width of the housing is dictated in large part by the need to accommodate the length of the motor shaft **74.** Thus, by reorienting the motor shaft **74** from a horizontal position to a vertical position the housing **40** can be made narrower.

It will be noted that the input shaft **21** is rotatably mounted in essentially the same manner as in the first embodiment. However, the movable swash plate **62** of the fifth embodiment is of a cradle-type, and is manually controllable along the concave circular-arc surface of the inner wall of the upper half housing **40U** by using a conventional operating mechanism.

With respect to the motor shaft **74** of the fifth embodiment, the upper end of the shaft **74** extends through the fixed swash plate **72** of the hydraulic motor **55,** with the fixed swash plate **72** being fixedly fitted into a concave formed at the inner wall of the upper half housing **40U.** The upper end of the motor shaft **74** is rotatably supported by the bearing **75,** and projects through the upper half housing **40U.** The projecting end of the motor shaft **74** carries the braking friction plate **95,** which rides on a spring member **97.** Thus, the braking mechanism is mounted on the top of the housing **40** rather than the side, thereby allowing the axle driving unit to be reduced in width. Further, it will be noted that the braking friction plate **95** is positioned in the proximity of the cooling fan **63,** and ventilation from the cooling fan **63** serves to blow away the dust collected on the braking friction plate **95.**

The lower end of the shaft **74** projects through a bore **121** provided in the center section **48** and the motor shaft is rotatably supported in the bore **121** by a bushing **122.** In this regard, in the preferred embodiment the center section is disposed at substantially mid-level along the vertical dimension of the enlarged region of the housing, and the counter shaft **89,** which is substantially parallel to the axle **20L,** is disposed below the center section **48.** The lower end of the motor shaft **74** which projects through the center section **48** carries the gear **90** which imparts driving force to the counter shaft **89,** with such gear **90** defining a bevel gear in this embodiment.

In the fifth embodiment illustrated in **FIGS. 24-28,** one end of the counter shaft **89** is rotatably supported by a bearing **124** which is sandwiched between the upper and lower half housings **40U** and **40L,** respectively. The other end of the counter shaft **89** is cooperatively supported by a projection **123** provided on the lower half housing **40L** and a leg member **125** which extends downwardly from the bottom surface of the center section **48.** More specifically, the projection **123** of the lower half housing **40L** defines a semicircular recess **126,** and the lower surface of the leg member **125** defines a further semicircular recess **128,** such that the recesses **126** and **128** cooperatively define a receptor for receiving a bushing **129** which, in turn, rotatably supports the end of the counter shaft **89.** In the preferred illustrated embodiment, the center section **48** and leg member **125** define separate components with a split pin **130** being provide to maintain the desired relative disposition of the center section **48** and leg member **125.** However, it will be recognized that the leg member **125** can be integrally formed with the center section **48.**

As illustrated in **FIG. 24,** the fifth embodiment is provided with a mechanism for removing iron powder and metal fragments from the oil within the housing **40.** In the illustrated embodiment, this mechanism includes a magnet **131** which is disposed between two partitions **132** and **134** provided on the inside wall of the lower half housing **40L.** A metal plate member **135** is secured to the partition **132** so as to engage and secure the magnet **131** in position, the plate member **135** providing a substantial magnet bonding surface for accumulating iron power and other metallic particulates.

Whereas the axle driving units **18L** and **18R** define separate housings **40,** and can be separately mounted on the body frame **11,** it is advantageous for the axle driving units **18L** and **18R** to be secured together to insure the stable mounting of the axle driving apparatus as a whole, and to insure the proper alignment of the axles **20L** and **20R.** Accordingly, as illustrated in **FIGS. 27** and **28,** the fifth embodiment of the present invention is provided with a coupling mechanism referenced generally at **136** for securing the housings of the axle driving units **18L** and **18R** together.

In the preferred embodiment, the coupling mechanism **136** includes a dowel member **138,** the opposite ends of which are closely received in the unused third bearing support **110** of the axle driving unit **18L** and the unused first bearing support **42** of the axle driving unit **18R.** It will be recognized that this dowel member **138,** which in the preferred illustrated embodiment defines a length of pipe, serves to maintain the positions of the units **18L** and **18R** such that the axles **20L** and **20R** are aligned on a common rotational axis. The coupling mechanism **136** also includes a pair of C-shaped coupling brackets **139A** and **139B** which engage and extend between the mounting bosses **41A** and **41B** on either side of the bearing supports **110** and **42.** Holes are provided in the upper flange of the coupling brackets **139A** and **139B** which register with the mounting bores provided in the mounting bosses **41A** and **41B,** and which register with operatively associated holes provided in the lower flange of the coupling brackets **139A** and **139B** Accordingly, to secure the coupling brackets in place, bolts **140** are inserted through the holes in the upper flange of the coupling brackets **139A** and **139B,** through the mounting bores of the mounting bosses and holes of the lower flange of the coupling bracket, and secured in place.

It will be recognized that the coupling mechanism **136** can be used with any of the illustrated embodiments of the present invention. Further, the illustrated coupling mechanism **136** is merely illustrative of one suitable mechanism for securing the units **18L** and **18R** together and it is contemplated that other mechanism can be interchangeably used.

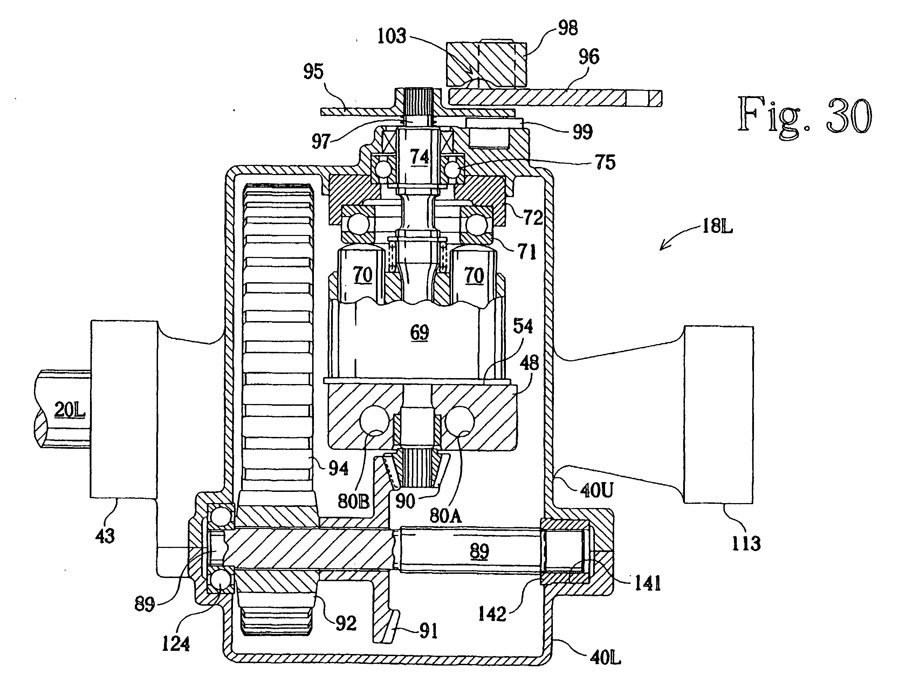

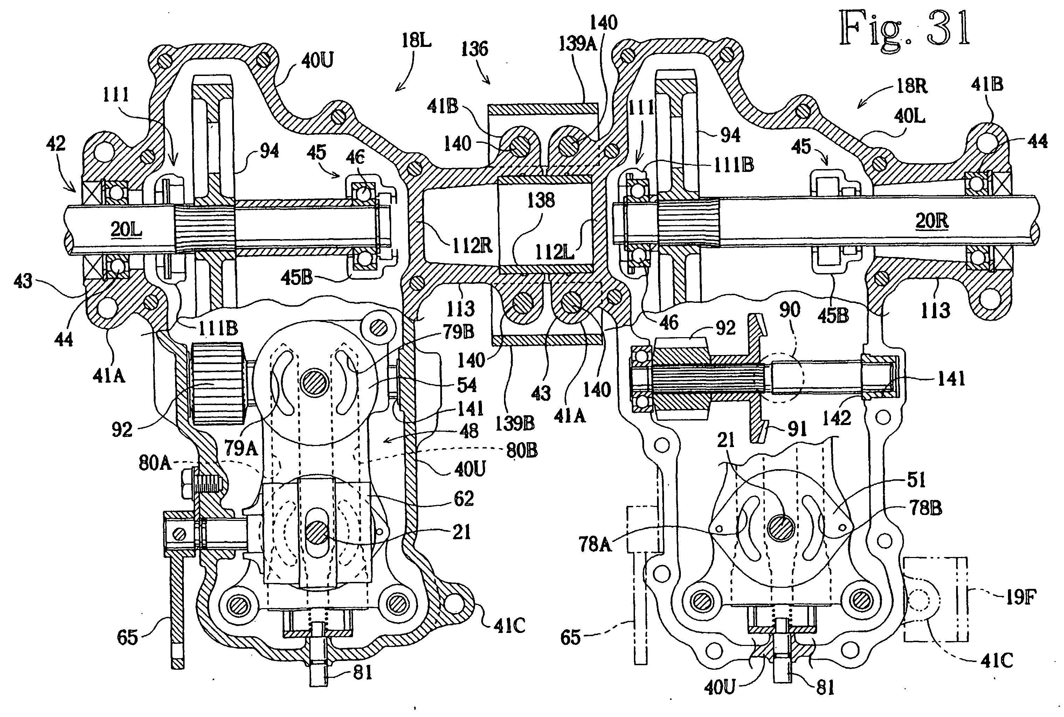

In **FIGS. 29-31,** a sixth embodiment of the axle driving units of the present invention is illustrated. In this regard, the axle driving units **18L** and **18R** of the sixth embodiment are similar in construction to the units **18L** and **18R** of the fifth embodiment. However, in the sixth embodiment no leg member **125** is provided, and, instead, the upper half housing **40U** and the lower half housing **40L** cooperatively define a receptor **141** in which is mounted a bushing **142** which rotatably supports the end of the counter shaft **89.**

In light of the above, it will be recognized that the present invention provides an axle driving apparatus having great advantages over the prior art. The apparatus can be mounted on a relatively small body frame, and includes an axle driving unit which can alternatively be used as either a left side or a right side axle driving unit by simply changing the disposition of the operatively associated axle. Moreover, the apparatus is drivingly connected to the prime mover of a vehicle by a single driving belt, and allows the vehicle on which it is mounted to define a low center of gravity to improve road ability.

## Claims

1. An axle driving apparatus for being mounted on the body frame (11) of a vehicle, said axle driving apparatus comprising:
a housing;
a single axle (20L, 20R) defining a longitudinal axis and having a proximal end portion rotatably mounted in said housing and a distal end portion extending outwardly only from a first side of said housing; an enlarged region defined by said housing, said enlarged region extending substantially perpendicular to said longitudinal axis of said axle, from said housing; and
a hydraulic stepless speed change assembly (22) disposed within said enlarged region, said speed change assembly including a hydraulic pump (52) having an input shaft (21) projecting from said enlarged region, said input shaft (21) having a rotational axis substantially rectangular to said longitudinal axis, and including a hydraulic motor (55) having an output shaft (74) drivingly connected to said single axle.

2. The axle driving apparatus of Claim 1 wherein said hydraulic pump (52) is mounted within said enlarged region a first preselected distance from said single axle, and said hydraulic motor (55) is mounted within said enlarged region a second preselected distance from said single axle, said first preselected distance being greater than said second preselected distance, said input shaft (21) of said hydraulic stepless speed change assembly which is mounted within said enlarged region being mounted a distance from said single axle (20L, 20R) which is greater than the distance from said output shaft (21) to said single axle (20L, 20R).

3. The axle driving apparatus of Claim 1 wherein said speed change assembly includes a center section (218) separately disposed in said enlarged region for establishing fluid communication between said hydraulic pump (54) and said hydraulic motor (55), said center section (48) having a pump mounting surface (85) for mounting said hydraulic pump and a motor mounting surface (54) for mounting said hydraulic motor, said pump mounting surface and said motor mounting surface being positioned for mounting said hydraulic pump a distance from said axle which is greater than the distance from said hydraulic motor to said single axle.

4. The axle driving apparatus of Claim 1 wherein said speed change assembly includes a center section (48) separately disposed in said enlarged region for establishing fluid communication between said hydraulic pump (52) and said hydraulic pump (55), said center section having a pump mounting surface (85) for mounting said hydraulic pump and a motor mounting surface (54) for mounting said hydraulic motor, said pump mounting surface and said motor mounting surface being positioned for mounting said hydraulic pump a distance from said axle which is greater than the distance from said hydraulic motor to said single axle, and wherein said center section defines a first side surface on which said pump mounting surface is formed and defines a second side surface on which said motor mounting surface is formed, said second side surface being disposed substantially perpendicular to said first side surface of said center section.

5. The axle driving apparatus of Claim 1 wherein said speed change assembly includes a center section (48) separately disposed in said enlarged region for establishing fluid communication between said hydraulic pump (52) and said hydraulic motor (55), said center section having a pump mounting surface (75) for mounting said hydraulic pump and a motor mounting surface (54) for mounting said hydraulic motor, said pump mounting surface and said motor mounting surface being positioned for mounting said hydraulic pump a distance from said axle which is greater than the distance from said hydraulic motor to said single axle and wherein said center section defines a first side surface, and said pump mounting surface and said motor mounting surface are formed on said first side surface of said center section.

6. The axle driving apparatus of Claim 1 wherein said hydraulic pump is mounted with said enlarged region a first preselected distance from said single axle, (20L, 20R) and said hydraulic motor (55) is mounted within said enlarged region a second preselected distance from said single axle, said first preselected distance being greater than second preselected distance, said input shaft (21) of said hydraulic stepless speed change assembly mounted within said enlarged region being mounted a distance from said single axle which is greater than the distance from said output shaft to said single axle, and wherein said output shaft (74) is substantially perpendicular to said input shaft.

7. The axle driving apparatus of claim 1 wherein said hydraulic pump (52) is mounted within said enlarged region a first preselected distance from said single axle, and said hydraulic motor (55) is mounted within said enlarged region a second preselected distance from said single axle, said first preselected distance being greater than said second preselected distance, said input shaft of said hydraulic stepless speed change assembly mounted within said enlarged region being mounted a distance from said single axle which is greater than the distance from said output shaft to said single axle and wherein said output shaft is substantially parallel to said input shaft (21).

8. The axle driving apparatus of Claim 1 wherein:
(a) said housing includes two housing portions (40U, 40L) separately joined along a junction surface which is substantially parallel to the longitudinal axis of said single axle, and said enlarged region is formed within each said housing portion;
(b) one of said housing portions supports said single axle (20L, 20R), and
(c) a braking assembly is disposed on said output shaft for selectively braking said single axle.

9. The axle driving apparatus of Claim 1 comprising:
a pair of oppositely disposed hollow tube portions (43) defined by said housing and substantially coaxially aligned with said longitudinal axis of said single axle for alternatively receiving therethrough said single axle.

10. The axle driving apparatus of claim 9 wherein
one of said pair of hollow tube portions being open to project said single axle (20L, 20R) from said housing and the other one of said pair of hollow tube portions (43) being sealed to prohibit fluid communication with the interior of said housing through said other one of said pair of hollow tube portions.

11. The axle driving apparatus of Claim 10 wherein said apparatus further comprises;
a first bearing support means (42) disposed in said one of said pair of hollow tube portions (43) open to project said single axle, (20L, 20R) for rotatably supporting said axle proximate the point at which said single axle projects from said housing; and
a second bearing support means (45) disposed within said housing and aligned substantially coaxially with said first bearing support means for supporting said proximal end portion of said single axle.

12. The axle driving apparatus of Claim 1 wherein said housing defines at least two housing portions (40U, 40L) detachably joined along a junction surface substantially parallel to said longitudinal axis of said single axle, and wherein each said housing portion includes said enlarged region.

13. The axle driving apparatus of Claim 12 wherein said junction surface of said housing portions is substantially horizontally disposed when said axle driving apparatus is mounted on said body frame (11) of said vehicle such that said housing defines an upper housing portion and a lower housing portion, and wherein said single axle is mounted in said upper portion of said housing.

14. An axle driving apparatus for being mounted on the body frame (11) of a vehicle and for independently rotating first and second wheel members (12L, 12R), said axle driving apparatus comprising:
first and second housings (40) adjacently mounted on said body frame, each said first and second housing having first and second side portions;
a single axle (20L) rotatably supported by said first housing and a single axle (20R) rotatably supported by said second housing, said single axle of said first housing defining a first longitudinal axis and having a proximal end portion rotatably mounted in said first housing and a distal end portion extending outwardly from said first side portion of said first housing for supporting said first wheel member, said single axle of said second housing being substantially coaxially aligned with said single axle of said first housing and having a proximal end portion rotatably mounted in said second housing and a distal end portion extending outwardly from said second side portion of said second housing for supporting said second wheel member, whereby said single axles are oppositely disposed so as to support said first and second wheel members on opposite sides of said adjacently mounted first and second housings;
an enlarged region defined by each said first and second housing; and
a speed change assembly disposed within each said enlarged region, each said speed change assembly including an input shaft (21) disposed on a second longitudinal axis substantially perpendicular to said first longitudinal axis substantially perpendicular to said first longitudinal axis so as to project from an upper side of said enlarged region of said first and second housing operatively associated therewith, and including an output shaft (74) drivingly connected to one said single axle.

15. The axle driving apparatus of Claim 14 wherein said each speed change assembly comprises a hydraulic stepless transmission including a hydraulic pump (52) connected to one said input shaft and a hydraulic motor (55) connected to one said output shaft.

16. The axle driving apparatus of Claim 15, wherein each said hydraulic pump (52) is mounted within said enlarged region of said first and second housings a first preselected distance from said single axle, and each said hydraulic motor is mounted within said enlarged region of said first and second housing a second preselected distance from said single axle, said first preselected distance being greater than said second preselected distance.

17. The axle driving apparatus of Claim 14 wherein said apparatus further comprises an input pulley (28) disposed on each said input shaft (21) for being drivingly connected by drive belt to a drive pulley of a prime mover of said vehicle.

18. The axle driving apparatus of Claim 14 wherein said second side portion of said first housing is detachably connected to said first side portion of said second housing.

19. The axle driving apparatus of Claim 14 wherein said enlarged regions extending substantially horizontally as said first and second housings (40) are mounted on said body frame of said vehicle; and wherein the input shaft (21) of each said speed change assembly being substantially vertically disposed and said distal end of said input shaft projecting from an upper side of said enlarged region operatively associated therewith,
and said distal end of each said input shaft carrying an input pulley for rotating said input shaft, and including a driving belt (25) for drivingly connecting each said input pulley to a prime mover on said vehicle.

20. The axle driving apparatus of Claim 19 wherein said prime mover of said vehicle includes a crank shaft (24) carrying a drive pulley (26) for being drivingly connected to said input pulleys of said axle driving apparatus, and wherein said drive pulley (269 and said input pulley (28) are disposed in a triangular orientation in plan view when said axle driving apparatus is mounted on said body frame of said vehicle.

21. The axle driving apparatus of Claim 20 wherein said drive pulley is aligned in a first plane perpendicular to the rotational axis of said crank shaft (24) and wherein said input pulleys of said axle driving apparatus are aligned in said first plane and a single said driving belt is received about said input pulleys and said drive pulley.

22. The axle driving apparatus of claim 21, wherein said apparatus further comprises a pair of tension pulleys (29) for rotatably pushing a portion of said single said driving belt, one said tension pulley being disposed along the path of said driving belt between one said input pulley and said drive pulley, and the other said tension pulley being disposed along the path of said driving belt between the other said input pulley and said drive pulley, whereby said single said driving belt is selectively tensioned.

23. The axle driving apparatus of Claim 14 each said first and second housing defining a length greater than the width of said first and second housing, said length of each said first and second housing extending rectangularly and horizontally with respect to the longitudinal axes of said first and second axles;
said speed change assembly disposed within each said first and second housings, including a substantial vertical input shaft (21) and output shaft; and
a power transmitting means disposed within each said first and second housing, for drivingly connecting said output shafts and said axles;
wherein each said input shaft is disposed along the length of said first and second housing at a first end portion of said first and second housing, said power transmitting means is disposed within, and along the length of, said first and second housing proximate the middle of said first and second housing, and said first and second axles are disposed along the length of said first and second housing, respectively, at a second end portion of said first and second housing.

24. The axle driving apparatus of Claim 23, wherein:
each said speed change assembly includes a hydraulic pump (52) and hydraulic motor (55) so as to define a hydraulic stepless speed change assembly (22), said hydraulic pump being connected to said input shaft, said output shaft being connected to said hydraulic motor and being disposed between said input shaft (21) and said axle such that the rotational axis of said output shaft is substantially parallel to the rotational axis of said axle;
wherein each said power transmitting means includes:
a counter shaft (89) disposed between said output shaft (74) and said axle (20L,20R) with the rotational axis of said counter shaft being substantially parallel to the axis of said axle;
a first gear train (90,91) for connecting said output shaft and said counter shaft; and
a second gear train (92,94) for connecting said counter shaft and said axle; and
wherein said hydraulic motor comprises a cylinder block (69) and said second gear train is oppositely disposed against said cylinder block.

25. The axle driving apparatus of Claim 23, wherein:
each said speed change assembly includes a hydraulic pump (52) and a hydraulic motor (55) so as to define a hydraulic stepless speed change assembly, said hydraulic pump being connected to said input shaft (21), said output shaft (74) being connected to said hydraulic motor and being disposed such that the rotational axis of said output shaft is substantially rectangular to the rotational axis of said axle; and
wherein each said output transmitting means includes:
a counter shaft (89) disposed substantially rectangular to said output shaft and substantially parallel to said axle, with said counter shaft being disposed on the opposite side of said axle relative to said hydraulic motor such that said axle is disposed between said hydraulic motor and said counter shaft;
a first gear train of bevel gear type (90,91) for connecting said output shaft and said counter shaft; and
a second gear train (92,94) for connecting said counter shaft and said axle.

26. The axle driving apparatus of Claim 23, wherein:
each said speed change assembly includes a hydraulic pump (52) and a hydraulic motor (55) so as to define a hydraulic stepless speed change assembly, said hydraulic pump being connected to said input shaft (21) said output shaft being connected to said hydraulic motor and being disposed such that the rotational axis of said output shaft (21) is substantially parallel to the rotational axis of said input shaft, each said speed change assembly also including a center section defining a flat-shaped body for mounting said hydraulic pump and said hydraulic motor, said center section being dispose within an enlarged region of said first and second housing at substantially middle level along the vertical dimension of said enlarged region, said center portion defining an opening therethrough whereby a lower end portion of said output shaft extends through said center section and protrudes from a lower surface of said center section; and
wherein each said output transmitting means includes;
a counter shaft disposed substantially rectangular to said output shaft and substantially parallel to said axle, with said counter shaft being disposed below said center section;
a first gear train of bevel gear type for connecting said lower end of said output shaft and said counter shaft; and
a second gear train for connecting said counter shaft and said axle.

27. The axle driving apparatus of Claim 26, wherein said center portion defines an upper surface and wherein said housing defines at least an upper housing portion and a lower housing portion joined along a junction surface which is substantially parallel to said upper surface of said center section.

28. The axle driving apparatus of Claim 27, wherein said counter shaft is interposed between said upper housing portion and said lower housing portion.

29. The axle driving apparatus of Claim 26 wherein said center section includes a support portion for supporting said counter shaft.

30. The axle driving apparatus of Claim 10 wherein said speed change assembly includes a center section separately disposed in said enlarged region for establishing fluid communication between said hydraulic pump (55) and said hydraulic motor (52), said center section having a pump mounting surface (51) for mounting said hydraulic pump and a motor mounting surface (54) for mounting said hydraulic motor.

31. The axle driving apparatus of Claim 30 wherein said center section defines a first side surface on which said pump mounting surface is formed and defines a second side surface on which said motor mounting surface is formed, said second side surface being disposed substantially perpendicular to said first side surface of said center section.

32. The axle driving apparatus of Claim 30 wherein said center section defines a first side surface and wherein said pump mounting surface and said motor mounting surface are formed on said first side surface of said center section.

33. The axle driving apparatus of Claim 10 wherein said output shaft is substantially perpendicular to said input shaft.

34. The axle driving apparatus of Claim 10 wherein said output shaft is substantially parallel to said input shaft.

35. The axle driving apparatus of Claim 34 wherein said input shaft projects from said enlarged region on a first side of said housing, and said output shaft defines a first end portion projecting from said enlarged region on said first side of said housing, and wherein said axle driving apparatus further comprises a braking assembly mounted on said first end portion of said output shaft for selectively braking said output shaft.

## Patentansprüche

1. Achsantriebsvorrichtung zur Anbringung an dem Karosseriegerippe (11) eines Fahrzeugs, wobei die Achsantriebsvorrichtung umfasst:
ein Gehäuse;
eine einzelne Achse (20L, 20R), die eine Längsachse bildet und einen hinteren Endabschnitt, der drehbar in dem Gehäuse angebracht ist, sowie einen vorderen Endabschnitt aufweist, der sich nur von einer ersten Seite des Gehäuses nach außen erstreckt; einen erweiterten Bereich, der durch das Gehäuse gebildet wird, wobei der erweiterte Bereich sich im Wesentlichen senkrecht zu der Längsachse der Achse von dem Gehäuse aus erstreckt; und
eine hydraulische stufenlose Drehzahländerungsbaugruppe (22), die in dem erweiterten Bereich angeordnet ist, wobei die Drehzahländerungsbaugruppe eine Hydraulikpumpe (53) mit einer Eingangswelle (21) enthält, die von dem erweiterten Bereich vorsteht, wobei die Eingangswelle (21) eine Drehachse hat, die im Wesentlichen rechtwinklig zu der Längsachse ist, und die einen Hydraulikmotor (55) mit einer Ausgangswelle (74) enthält, die antreibend mit der einzelnen Achse verbunden ist.

2. Achsantriebsvorrichtung nach Anspruch 1, wobei die Hydraulikpumpe (52) in dem erweiterten Bereich in einem ersten ausgewählten Abstand zu der einzelnen Achse angebracht ist und der Hydraulikmotor (55) in dem erweiterten Bereich in einem zweiten ausgewählten Abstand zu der einzelnen Achse angebracht ist, wobei der erste ausgewählte Abstand größer ist als der zweite ausgewählte Abstand und die Eingangswelle (21) der hydraulischen stufenlosen Drehzahländerungsbaugruppe, die in dem erweiterten Bereich angebracht ist, in einem Abstand zu der einzelnen Achse (20L, 20R) angebracht ist, der größer ist als der Abstand von der Ausgangswelle (21) zu der einzelnen Achse (20L, 20R).

3. Achsantriebsvorrichtung nach Anspruch 1, wobei die Drehzahländerungsbaugruppe einen Mittelteil (218) enthält, der separat in dem erweiterten Bereich angeordnet ist, um Fluidverbindung zwischen der Hydraulikpumpe (54) und dem Hydraulikmotor (55) herzustellen, wobei der Mittelteil (48) eine Pumpenanbringungsfläche (85) zum Anbringen der Hydraulikpumpe und eine Motoranbringungsfläche (54) zum Anbringen des Hydraulikmotors aufweist, und wobei die Pumpenanbringungsfläche sowie die Motoranbringungsfläche so angeordnet sind, dass die Hydraulikpumpe in einem Abstand zu der Achse angebracht ist, der größer ist als der Abstand von dem Hydraulikmotor zu der einzelnen Achse.

4. Achsantriebsvorrichtung nach Anspruch 1, wobei die Drehzahländerungsbaugruppe einen Mittelteil (48) enthält, der separat in dem erweiterten Bereich angeordnet ist, um Fluidverbindung zwischen der Hydraulikpumpe (52) und dem Hydraulikmotor (55) herzustellen, wobei der Mittelteil eine Pumpenanbringungsfläche (85) zum Anbringen der Hydraulikpumpe und eine Motoranbringfläche (54) zum Anbringen des Hydraulikmotors aufweist, und wobei die Pumpenanbringungsfläche sowie die Motoranbringungsfläche so angeordnet sind, dass die Hydraulikpumpe in einem Abstand zu der Achse angebracht ist, der größer ist als der Abstand von dem Hydraulikmotor zu der einzelnen Achse, und wobei der Mittelteil eine erste Seitenfläche bildet, an der die Pumpenabringungsfläche ausgebildet ist, und eine zweite Seitenfläche bildet, an der die Motoranbringungsfläche ausgebildet ist, wobei die zweite Seitenfläche im Wesentlich senkrecht zu der ersten Seitenfläche des Mittelteils angeordnet ist.

5. Achsantriebsvorrichtung nach Anspruch 1, wobei die Drehzahländerungsbaugruppe einen Mittelteil (48) enthält, der separat in dem erweiterten Bereich angeordnet ist, um Fluidverbindung zwischen der Hydraulikpumpe (52) und dem Hydraulikmotor (55) herzustellen, wobei der Mittelteil eine Pumpenanbringungsfläche (75) zum Anbringen der Hydraulikpumpe und eine Motoranbringfläche (54) zum Anbringen des Hydraulikmotors aufweist, und wobei die Pumpenanbringungsfläche sowie die Motoranbringungsfläche so angeordnet sind, dass die Hydraulikpumpe in einem Abstand zu der Achse angebracht ist, der größer ist als der Abstand von dem Hydraulikmotor zu der einzelnen Achse, und wobei der Mittelteil eine erste Seitenfläche bildet, und die Pumpenabringungsfläche sowie die Motoranbringungsfläche an der ersten Seitenfläche des Mittelteils ausgebildet sind.

6. Achsantriebsvorrichtung nach Anspruch 1, wobei die Hydraulikpumpe so angebracht ist, dass der erweiterte Bereiche einen ersten ausgewählten Abstand zu der einzelnen Achse (20L, 20R) hat und der Hydraulikmotor (55) in dem erweiterten Bereich in einem zweiten ausgewählten Abstand zu der einzelnen Achse angebracht ist, wobei der erste ausgewählte Abstand größer ist als der zweite ausgewählte Abstand, und wobei die Eingangswelle (21) der hydraulischen stufenlosen Drehzahländerungsbaugruppe, die in dem erweiterten Bereich angebracht ist, in einem Abstand zu einzelnen Achse angebracht ist, der größer ist als der Abstand von der Ausgangswelle zu der einzelnen Achse, und wobei die Ausgangswelle (74) im Wesentlichen senkrecht zu der Eingangswelle ist.

7. Achsantriebsvorrichtung nach Anspruch 1, wobei die Hydraulikpumpe (52) in dem erweiterten Bereich in einem ersten ausgewählten Abstand zu der einzelnen Achse angebracht ist und der Hydraulikmotor (55) in dem erweiterten Bereich in einem zweiten ausgewählten Abstand zu der einzelnen Achse angebracht ist, wobei der erste ausgewählte Abstand größer ist als der zweite ausgewählte Abstand, und wobei die Eingangswelle der hydraulischen stufenlosen Drehzahländerungsbaugruppe, die in dem erweiterten Bereich angebracht ist, in einem Abstand zu der einzelnen Achse angebracht ist, der größer ist als der Abstand von der Ausgangswelle zu der einzelnen Achse, und wobei die Ausgangswelle im Wesentlichen parallel zu der Eingangswelle (21) ist.

8. Achsantriebsvorrichtung nach Anspruch 1, wobei
a) das Gehäuse zwei Gehäuseabschnitte (40U, 40L) enthält, die separat entlang einer Verbindungsfläche verbunden sind, die im Wesentlichen parallel zu der Längsachse der einzelnen Achse ist, und der erweiterte Bereich innerhalb jedes Gehäuseabschnitts ausgebildet ist;
b) einer der Gehäuseabschnitte die einzelne Achse (20L, 20R) trägt; und
c) eine Bremsbaugruppe an der Ausgangswelle angeordnet ist, um die einzelne Achse selektiv zu bremsen.

9. Achsantriebsvorrichtung nach Anspruch 1, die umfasst:
ein Paar einander gegenüberliegend angeordneter hohler Röhrenabschnitte (43), die durch das Gehäuse gebildet werden und im Wesentlichen koaxial auf die Längsachse der einzelnen Achse ausgerichtet sind, um abwechselnd die einzelne Achse darin aufzunehmen.

10. Achsantriebsvorrichtung nach Anspruch 9, wobei
einer des Paars hohler Röhrenabschnitte offen ist, so dass die einzelne Achse (20L, 20R) aus dem Gehäuse vorsteht, und der andere des Paars hohler Röhrenabschnitte (43) verschlossen ist, um Fluidverbindung mit dem Inneren des Gehäuses über den anderen des Paars hohler Röhrenabschnitte zu unterbinden.

11. Achsantriebsvorrichtung nach Anspruch 10, wobei die Vorrichtung des Weiteren umfasst:
eine erste Lagerträgereinrichtung (42), die in einem des Paars hohler Röhrenabschnitte (43) angeordnet ist, der offen ist, so dass die einzelne Achse (20L, 20R) vorsteht, um die Achse in der Nähe des Punktes drehbar zu tragen, an dem die einzelne Achse aus dem Gehäuse vorsteht; und
eine zweite Lagerträgereinrichtung (45), die in dem Gehäuse angeordnet und im Wesentlichen koaxial auf die erste Lagerträgereinrichtung ausgerichtet ist, um den hinteren Endabschnitt der einzelnen Achse zu tragen.

12. Achsantriebsvorrichtung nach Anspruch 1, wobei das Gehäuse wenigstens zwei Gehäuseabschnitte (40U, 40L) bildet, die lösbar entlang einer Verbindungsfläche im Wesentlichen parallel zu der Längsachse der einzelnen Achse verbunden sind, und wobei jeder der Gehäuseabschnitte den erweiterten Bereich einschließt.

13. Achsantriebsvorrichtung nach Anspruch 12, wobei die Verbindungsfläche der Gehäuseabschnitte im Wesentlichen horizontal angeordnet ist, wenn die Achsantriebsvorrichtung an dem Karosseriegerippe (11) des Fahrzeugs angebracht ist, so dass das Gehäuse einen oberen Gehäuseabschnitt und einen unteren Gehäuseabschnitt bildet, und wobei die einzelne Achse in dem oberen Abschnitt des Gehäuses angebracht ist.

14. Achsantriebsvorrichtung zur Anbringung an dem Karosseriegerippe (11) eines Fahrzeugs und zum Drehen eines ersten und eines zweiten Radelementes (12L, 12R) unabhängig voneinander, wobei die Achsantriebsvorrichtung umfasst:
ein erstes und ein zweites Gehäuse (40), die nebeneinander an dem Karosseriegerippe angebracht sind, wobei das erste und das zweite Gehäuse jeweils einen ersten und einen zweiten Seitenabschnitt aufweisen;
eine einzelne Achse (20L), die drehbar von dem ersten Gehäuse getragen wird, und eine einzelne Achse (20R), die drehbar von dem zweiten Gehäuse getragen wird, wobei die einzelne Achse des ersten Gehäuses eine erste Längsachse bildet und einen hinteren Endabschnitt, der drehbar in dem ersten Gehäuse angebracht ist, sowie einen vorderen Endabschnitt aufweist, der sich von dem ersten Seitenabschnitt des ersten Gehäuses nach außen erstreckt, um das erste Radelement zu tragen, wobei die einzelne Achse des zweiten Gehäuses im Wesentlichen koaxial auf die einzelne Achse des ersten Gehäuses ausgerichtet ist und einen hinteren Endabschnitt, der drehbar in dem zweiten Gehäuse angebracht ist, sowie einen vorderen Endabschnitt aufweist, der sich von dem zweiten Seitenabschnitt des zweiten Gehäuses nach außen erstreckt, um das zweite Radelement zu tragen, wobei die einzelnen Achsen einander gegenüberliegend angeordnet sind, so dass sie das erste und das zweite Radelelement an einander gegenüberliegenden Seiten des ersten und des zweiten Gehäuses, die nebeneinander angebracht sind, tragen;
einen erweiterten Abschnitt, der durch das erste und des zweite Gehäuse gebildet wird; und
eine Drehzahländerungsbaugruppe, die in jedem der erweiterten Abschnitte ausgebildet ist, wobei jede Drehzahländerungsbaugruppe eine Eingangswelle (21) enthält, die auf einer zweiten Längsachse im Wesentlichen senkrecht zu der ersten Längsachse angeordnet ist, so dass sie von einer Oberseite des erweiterten Bereichs des ersten und des zweiten Gehäuses, die funktionell damit verbunden sind, vorsteht, und eine Ausgangswelle (74) enthält, die antreibend mit einer der einzelnen Achsen verbunden ist.

15. Achsantriebsvorrichtung nach Anspruch 14, wobei jede Drehzahländerungsbaugruppe ein hydraulisches stufenloses Getriebe umfasst, das eine Hydraulikpumpe (52), die mit einer der Eingangswellen verbunden ist, und einen Hydraulikmotor (55), der mit einer der Ausgangswellen verbunden ist, enthält.

16. Achsantriebsvorrichtung nach Anspruch 15, wobei jede Hydraulikpumpe (52) in dem erweiterten Bereich des ersten und des zweiten Gehäuses in einem ersten ausgewählten Abstand zu der einzelnen Achse angebracht ist und jeder Hydraulikmotor in dem erweiterten Abschnitt des ersten und des zweiten Gehäuses in einem ausgewählten Abstand zu der einzelnen Achse angebracht ist, wobei der erste ausgewählte Abstand größer ist als der zweite ausgewählte Abstand.

17. Achsantriebsvorrichtung nach Anspruch 14, wobei die Vorrichtung des Weiteren eine Eingangsriemenscheibe (28) umfasst, die an jeder Eingangswelle (21) angeordnet ist, um antreibend mit einem Antriebsriemen einer Antriebsriemenscheibe eines Antriebsaggregats des Fahrzeugs verbunden zu werden.

18. Achsantriebsvorrichtung nach Anspruch 14, wobei der zweite Seitenabschnitt des ersten Gehäuses lösbar mit dem ersten Seitenabschnitt des zweiten Gehäuses verbunden ist.

19. Achsantriebsvorrichtung nach Anspruch 14, wobei sich die erweiterten Bereiche im Wesentlichen horizontal erstrecken, wenn das erste und das zweite Gehäuse (40) an dem Karosseriegerippe des Fahrzeugs angebracht sind, und wobei die Eingangswelle (21) jeder Drehzahländerungsbaugruppe im Wesentlichen vertikal angeordnet ist und das vordere Ende der Eingangswelle von einer Oberseite des erweiterten Abschnitts vorsteht, der funktionell damit verbunden ist,
und das vordere Ende jeder Eingangswelle eine Eingangsriemenscheibe trägt, die die Eingangswelle dreht, und einen Antriebsriemen (25) enthält, der die Eingangsriemenscheibe antreibend mit einem Antriebsaggregat an dem Fahrzeug verbindet.

20. Achsantriebsvorrichtung nach Anspruch 19, wobei das Antriebsaggregat des Fahrzeugs eine Kurbelwelle (24) enthält, die eine Antriebsriemenscheibe (26) trägt, die antreibend mit den Eingangsriemenscheiben der Achsantriebsvorrichtung verbunden wird, und wobei die Antriebsriemenscheibe (26) und die Eingangsriemenscheibe (28) in Draufsicht in dreieckiger Ausrichtung angeordnet sind, wenn die Achsantriebsvorrichtung an dem Karosseriegerippe des Fahrzeugs angebracht ist.

21. Achsantriebsvorrichtung nach Anspruch 20, wobei die Antriebsriemenscheibe in einer ersten Ebene senkrecht zur Drehachse der Kurbelwelle (24) ausgerichtet ist und wobei die Eingangsriemenscheiben der Achsantriebsvorrichtung in der ersten Ebene ausgerichtet sind und ein einzelner Antriebsriemen um die Eingangsriemenscheiben und die Antriebsriemenscheibe herum aufgenommen ist.

22. Achsantriebsvorrichtung nach Anspruch 21, wobei die Vorrichtung des Weiteren ein Paar Spannriemenscheiben (29) umfasst, die drehend auf einen Abschnitt des einzelnen Antriebsriemens drücken, wobei die eine Spannriemenscheibe auf dem Weg des Antriebsriemens zwischen der einen Eingangsriemenscheibe und der Antriebsriemenscheibe angeordnet ist, und die andere Spannriemenscheibe auf dem Weg des Antriebsriemens zwischen der anderen Eingangsriemenscheibe und der Antriebsriemenscheibe angeordnet ist, so dass der einzelne Antriebsriemen selektiv gespannt wird.

23. Achsantriebsvorrichtung nach Anspruch 14, wobei das erste und das zweite Gehäuse eine Länge bilden, die größer ist als die Breite des ersten und des zweiten Gehäuses, wobei die Länge des ersten und des zweiten Gehäuses sich rechtwinklig und horizontal in Bezug auf die Längsachsen der ersten und der zweiten Achse erstrecken;
die Drehzahländerungsvorrichtung, die in dem ersten und dem zweiten Gehäuse angeordnet ist, eine im Wesentlichen vertikale Eingangswelle (21) und eine Ausgangswelle enthält; und
eine Kraftübertragungseinrichtung in dem ersten und dem zweiten Gehäuse angeordnet ist, um die Ausgangswellen und die Achsen antreibend zu verbinden;
wobei jede Eingangswelle entlang der Länge des ersten und des zweiten Gehäuses an einem ersten Endabschnitt des ersten und des zweiten Gehäuses angeordnet ist, die Kraftübertragungseinrichtung in dem ersten und dem zweiten Gehäuse und entlang der Länge des ersten und des zweiten Gehäuses ungefähr in der Mitte angeordnet ist, und die erste sowie die zweite Achse entlang der Länge des ersten und des zweiten Gehäuses an einem zweiten Endabschnitt des ersten bzw. des zweiten Gehäuses angeordnet sind.

24. Achsantriebsvorrichtung nach Anspruch 23, wobei:
jede Drehzahländerungsbaugruppe eine Hydraulikpumpe (52) und einen Hydraulikmotor (55) enthält, so dass eine hydraulische stufenlose Drehzahländerungsbaugruppe (22) gebildet wird, wobei die Hydraulikpumpe mit der Eingangswelle verbunden ist und die Ausgangswelle mit dem Hydraulikmotor verbunden und zwischen der Eingangswelle (21) und der Achse so angeordnet ist, dass die Drehachse der Ausgangswelle im Wesentlichen parallel zur Drehachse der Achse ist;
wobei jede Kraftübertragungseinrichtung enthält:
eine Zwischenwelle (89), die zwischen der Ausgangswelle (74) und der Achse (20L, 20R) angeordnet ist, wobei die Drehachse der Zwischenwelle im Wesentlichen parallel zur Achse der Achse ist;
einen ersten Räderzug (90, 91), der die Ausgangswelle und die Zwischenwelle verbindet; und
einen zweiten Räderzug (92, 94), der die Zwischenwelle und die Achse verbindet; und
wobei der Hydraulikmotor einen Zylinderblock (69) umfasst, und der zweite Räderzug gegenüber dem Zylinderblock angeordnet ist.

25. Achsantriebsvorrichtung nach Anspruch 23, wobei:
jede Drehzahländerungsbaugruppe eine Hydraulikpumpe (52) und einen Hydraulikmotor (55) enthält, so dass eine hydraulische stufenlose Drehzahländerungsbaugruppe gebildet wird, wobei die Hydraulikpumpe mit der Eingangswelle (21) verbunden ist und die Ausgangswelle (74) mit dem Hydraulikmotor verbunden und so angeordnet ist, dass die Drehachse der Ausgangswelle im Wesentlichen rechtwinklig zur Drehachse der Achse ist; und
wobei jede Ausgangsübertragungseinrichtung enthält:
eine Zwischenwelle (89), die im Wesentlichen rechtwinklig zu der Ausgangswelle (74) und im Wesentlichen parallel zu der Achse angeordnet ist, wobei die Zwischenwelle an der in Bezug auf den Hydraulikmotor gegenüberliegenden Seite der Achse angeordnet ist, so dass die Achse zwischen dem Hydraulikmotor und der Zwischenwelle angeordnet ist;
einen ersten Räderzug vom Kegelradtyp (90, 91), der die Ausgangswelle und die Zwischenwelle verbindet; und
einen zweiten Räderzug (92, 94), der die Zwischenwelle und die Achse verbindet.

26. Achsantriebsvorrichtung nach Anspruch 23, wobei:
jede Drehzahländerungsbaugruppe eine Hydraulikpumpe (52) und einen Hydraulikmotor (55) enthält, so dass eine hydraulische stufenlose Drehzahländerungsbaugruppe gebildet wird, wobei die Hydraulikpumpe mit der Eingangswelle (21) verbunden ist und die Ausgangswelle mit dem Hydraulikmotor verbunden und so angeordnet ist, dass die Drehachse der Ausgangswelle (21) im Wesentlichen parallel zur Drehachse der Eingangswelle ist, wobei jede Drehzahländerungsbaugruppe des Weiteren einen Mittelteil enthält, der einen flach geformten Körper zum Anbringen der Hydraulikpumpe und des Hydraulikmotors aufweist, wobei der Mittelteil in einem erweiterten Bereich des ersten und des zweiten Gehäuses im Wesentlichen in der Vertikalausdehnung des erweiterten Bereiches angeordnet ist,
wobei der Mittelteil eine Öffnung aufweist, und wobei ein unterer Endabschnitt der Ausgangswelle sich durch den Mittelteil hindurch erstreckt und von einer Unterseite des Mittelteils aus vorsteht; und
wobei jede Ausgangsübertragungseinrichtung enthält:
eine Zwischenwelle, die im Wesentlichen rechtwinklig zu der Ausgangswelle und im Wesentlichen parallel zu der Achse angeordnet ist, wobei die Zwischenwelle unter dem Mittelteil angeordnet ist;
einem ersten Räderzug vom Kegelradtyp, der das untere Ende der Ausgangswelle und die Zwischenwelle verbindet; und
einen zweiten Räderzug, der die Zwischenwelle und die Achse verbindet.

27. Achsantriebsvorrichtung nach Anspruch 26, wobei der Mittelteil eine Oberseite aufweist und wobei das Gehäuse wenigstens einen oberen Gehäuseabschnitt und einen unteren Gehäuseabschnitt aufweist, die entlang einer Verbindungsfläche verbunden sind, die im Wesentlichen parallel zu der Oberseite des Mittelteils ist.

28. Achsantriebsvorrichtung nach Anspruch 27, wobei die Zwischenwelle zwischen dem oberen Gehäuseabschnitt und dem unteren Gehäuseabschnitt angeordnet ist.

29. Achsantriebsvorrichtung nach Anspruch 26, wobei der Mittelteil einen Trageabschnitt enthält, der die Zwischenwelle trägt.

30. Achsantriebsvorrichtung nach Anspruch 10, wobei die Drehzahländerungsbaugruppe einen Mittelteil enthält, der separat in dem erweiterten Bereich angeordnet ist, um Fluidverbindung zwischen der Hydraulikpumpe (55) und dem Hydraulikmotor (52) herzustellen, wobei der Mittelteil eine Pumpenabringungsfläche (51) zum Anbringen der Hydraulikpumpe und eine Motorabringungsfläche (54) zum Anbringen des Hydraulikmotors aufweist.

31. Achsantriebsvorrichtung nach Anspruch 30, wobei der Mittelteil eine erste Seitenfläche bildet, an der die Pumpenanbringungsfläche ausgebildet ist, und eine zweite Seitenfläche bildet, an der die Motoranbringungsfläche ausgebildet ist, wobei die erste Seitenfläche im Wesentlichen senkrecht zu der ersten Seitenfläche des Mittelteils angeordnet ist.

32. Achsantriebsvorrichtung nach Anspruch 30, wobei der Mittelteil eine erste Seitenfläche aufweist, und wobei die Pumpenanbringungsfläche und die Motoranbringungsfläche an der ersten Seitenfläche des Mittelteils ausgebildet sind.

33. Achsantriebsvorrichtung nach Anspruch 10, wobei die Ausgangswelle im Wesentlichen senkrecht zu der Eingangswelle ist.

34. Achsantriebsvorrichtung nach Anspruch 10, wobei die Ausgangswelle im Wesentlichen parallel zu der Eingangswelle ist.

35. Achsantriebsvorrichtung nach Anspruch 34, wobei die Eingangswelle von dem erweiterten Abschnitt an einer ersten Seite des Gehäuses vorsteht, und die Ausgangswelle einen ersten Endabschnitt bildet, der von dem erweiterten Bereich an der ersten Seite des Gehäuses vorsteht und wobei die Achsantriebsvorrichtung des Weiteren eine Bremsbaugruppe umfasst, die an dem ersten Endabschnitt der Ausgangswelle angebracht ist, um die Ausgangswelle selektiv zu bremsen.

## Revendications

1. Appareil d'entraînement pour essieu destiné à être monté sur le corps de châssis (11) d'un véhicule, ledit appareil d'entraînement pour essieu comprenant :
un carter ;
un essieu unique (20L, 20R) définissant un axe longitudinal et ayant une partie d'extrémité la plus proche montée en rotation dans ledit carter et une partie d'extrémité la plus éloignée s'étendant vers l'extérieur uniquement à partir d'un premier côté dudit carter ;
une zone agrandie définie par ledit carter, ladite zone agrandie s'étendant essentiellement de manière perpendiculaire au dit axe longitudinal dudit essieu, à partir dudit carter ; et
un ensemble de changement de vitesse hydraulique en continu (22) disposé à l'intérieur de ladite zone agrandie, ledit ensemble de changement de vitesse comprenant une pompe hydraulique (52) comportant un arbre d'entrée (21) en saillie à partir de ladite zone agrandie, ledit arbre d'entrée (21) ayant un axe de rotation essentiellement à angle droit par rapport au dit axe longitudinal, et comprenant un moteur hydraulique (55) comportant un arbre de sortie (74) connecté en entraînement au dit essieu unique.

2. Appareil d'entraînement pour essieu selon la revendication 1 dans lequel ladite pompe hydraulique (52) est montée à l'intérieur de ladite zone agrandie à une première distance présélectionnée à partir dudit essieu unique, et dans lequel ledit moteur hydraulique (55) est monté à l'intérieur de ladite zone agrandie à une seconde distance présélectionnée à partir dudit essieu unique, ladite première distance présélectionnée étant plus grande que ladite seconde distance présélectionnée, ledit arbre d'entrée (21) dudit ensemble de changement de vitesse hydraulique en continu qui est monté à l'intérieur de ladite zone agrandie étant monté à une distance à partir dudit essieu unique (20L, 20R) qui est plus grande que la distance existant entre ledit arbre de sortie (21) et ledit essieu unique (20L, 20R).

3. Appareil d'entraînement pour essieu selon la revendication 1 dans lequel ledit ensemble de changement de vitesse comprend une section centrale (218) disposée séparément dans ladite zone agrandie afin d'établir une communication par fluide entre ladite pompe hydraulique (54) et ledit moteur hydraulique (55), ladite section centrale (48) comportant une surface de montage de pompe (85) destinée à monter ladite pompe hydraulique et une surface de montage de moteur (54) destinée à monter ledit moteur hydraulique, ladite surface de montage de pompe et ladite surface de montage de moteur étant positionnées de manière à monter ladite pompe hydraulique à une distance dudit essieu qui est plus grande que la distance entre ledit moteur hydraulique et ledit essieu unique.

4. Appareil d'entraînement pour essieu selon la revendication 1 dans lequel ledit ensemble de changement de vitesse comprend une section centrale (48) disposée séparément dans ladite zone agrandie afin d'établir une communication par fluide entre ladite pompe hydraulique (52) et ledit moteur hydraulique (55), ladite section centrale comportant une surface de montage de pompe (85) destinée à monter ladite pompe hydraulique et une surface de montage de moteur (54) destinée à monter ledit moteur hydraulique, ladite surface de montage de pompe et ladite surface de montage de moteur étant positionnées de manière à monter ladite pompe hydraulique à une distance dudit essieu qui est plus grande que la distance entre ledit moteur hydraulique et ledit essieu unique, et dans lequel ladite section centrale définit une première surface latérale sur laquelle est formée ladite surface de montage de pompe et définit une seconde surface latérale sur laquelle est formée ladite surface de montage de moteur, ladite seconde surface latérale étant disposée de manière essentiellement perpendiculaire à ladite première surface latérale de ladite section centrale.

5. Appareil d'entraînement pour essieu selon la revendication 1 dans lequel ledit ensemble de changement de vitesse comprend une section centrale (48) disposée séparément dans ladite zone agrandie afin d'établir une communication par fluide entre ladite pompe hydraulique (52) et ledit moteur hydraulique (55), ladite section centrale comportant une surface de montage de pompe (75) destinée à monter ladite pompe hydraulique et une surface de montage de moteur (54) destinée à monter ledit moteur hydraulique, ladite surface de montage de pompe et ladite surface de montage de moteur étant positionnées de manière à monter ladite pompe hydraulique à une distance dudit essieu qui est plus grande que la distance entre ledit moteur hydraulique et ledit essieu unique et dans lequel ladite section centrale définit une première surface latérale, et dans lequel ladite surface de montage de pompe et ladite surface de montage de moteur sont formées sur ladite première surface latérale de ladite section centrale.

6. Appareil d'entraînement pour essieu selon la revendication 1 dans lequel ladite pompe hydraulique est montée à l'intérieur de ladite zone agrandie à une première distance présélectionnée à partir dudit essieu unique (20L, 20R) et dans lequel ledit moteur hydraulique (55) est monté à l'intérieur de ladite zone agrandie à une seconde distance présélectionnée à partir dudit essieu unique, ladite première distance présélectionnée étant plus grande que la seconde distance présélectionnée, ledit arbre d'entrée (21) dudit ensemble de changement de vitesse hydraulique en continu qui est monté à l'intérieur de ladite zone agrandie étant monté à une distance à partir dudit essieu unique qui est plus grande que la distance existant entre ledit arbre de sortie et ledit essieu unique, et dans lequel ledit arbre de sortie (74) est essentiellement perpendiculaire au dit arbre d'entrée.

7. Appareil d'entraînement pour essieu selon la revendication 1 dans lequel ladite pompe hydraulique (52) est montée à l'intérieur de ladite zone agrandie à une première distance présélectionnée à partir dudit essieu unique, et dans lequel ledit moteur hydraulique (55) est monté à l'intérieur de ladite zone agrandie à une seconde distance présélectionnée à partir dudit essieu unique, ladite première distance présélectionnée étant plus grande que ladite seconde distance présélectionnée, ledit arbre d'entrée dudit ensemble de changement de vitesse hydraulique en continu qui est monté à l'intérieur de ladite zone agrandie étant monté à une distance à partir dudit essieu unique qui est plus grande que la distance existant entre ledit arbre de sortie et ledit essieu unique, et dans lequel ledit arbre de sortie est essentiellement parallèle au dit arbre d'entrée (21).

8. Appareil d'entraînement pour essieu selon la revendication 1 dans lequel :
(a) ledit carter comprend deux parties de carter (40U, 40L) reliées de manière séparée le long d'une surface de jonction qui est essentiellement parallèle à l'axe longitudinal dudit essieu unique, et dans lequel ladite zone agrandie est formée à l'intérieur de chacune desdites parties de carter ;
(b) l'une desdites parties de carter supporte ledit essieu unique (20L, 20R) , et
(c) un ensemble de freinage est disposé sur ledit arbre de sortie afin de freiner ledit essieu unique de manière sélective.

9. Appareil d'entraînement pour essieu selon la revendication 1 comprenant :
une paire de parties de tube creux (43) disposées en opposition définies par ledit carter et étant alignées de manière essentiellement coaxiale avec ledit axe longitudinal dudit essieu unique afin de recevoir de manière alternée au travers d'elles ledit essieu unique.

10. Appareil d'entraînement pour essieu selon la revendication 9 dans lequel :
une de ladite paire de parties de tube creux étant ouverte afin de faire saillir ledit essieu unique (20L, 20R) à partir dudit carter et l'autre de ladite paire de parties de tube creux (43) étant isolée afin d'interdire une communication par fluide avec l'intérieur dudit carter par l'intermédiaire de ladite autre partie de ladite paire de parties de tube creux.

11. Appareil d'entraînement pour essieu selon la revendication 10 dans lequel ledit appareil comprend en outre :
des premiers moyens de support par palier (42) disposés dans l'une de ladite paire de parties de tube creux (43) s'ouvrent pour faire saillir ledit essieu unique (20L, 20R) afin de supporter en rotation ledit essieu à proximité du point où ledit essieu unique est en saillie à partir dudit carter ; et
des seconds moyens de support par palier (45) disposés à l'intérieur dudit carter et alignés essentiellement de manière coaxiale aux dits premiers moyens de support par palier afin de supporter ladite partie d'extrémité la plus proche dudit essieu unique.

12. Appareil d'entraînement pour essieu selon la revendication 1 dans lequel ledit carter définit au moins deux parties de carter (40U, 40L) connectés de manière amovible sur une surface de jonction essentiellement parallèle au dit axe longitudinal dudit essieu unique, et dans lequel chacune desdites parties de carter comprend ladite zone agrandie.

13. Appareil d'entraînement pour essieu selon la revendication 12 dans lequel ladite surface de jonction desdites parties de carter est disposée de manière essentiellement horizontale lorsque ledit appareil d'entraînement pour essieu est monté sur ledit corps de châssis (11) dudit véhicule de sorte que ledit carter définit une partie de carter supérieure et une partie de carter inférieure, et dans lequel un essieu unique est monté dans ladite partie supérieure dudit carter.

14. Appareil d'entraînement pour essieu destiné à être monté sur le corps de châssis (11) d'un véhicule et à faire tourner de manière indépendante un premier et un second élément de roue (12L, 12R), ledit appareil d'entraînement d'essieu comprenant :
des premier et second carters (40) montés de manière adjacente sur ledit corps de châssis, chacun desdits premier et second carters comportant une première et une seconde partie latérale ;
un essieu unique (20L) supporté en rotation par ledit premier carter et un essieu unique (20R) supporté en rotation par ledit second carter, ledit essieu unique dudit premier carter définissant un premier axe longitudinal et ayant une partie d'extrémité la plus proche montée en rotation dans ledit premier carter et une partie d'extrémité la plus éloignée s'étendant vers l'extérieur à partir de ladite première partie latérale dudit premier carter afin de supporter ledit premier élément de roue, ledit essieu unique dudit second carter étant essentiellement aligné de manière coaxiale avec ledit essieu unique dudit premier carter et ayant une partie d'extrémité la plus proche montée en rotation dans ledit second carter et une partie d'extrémité la plus éloignée s'étendant vers l'extérieur à partir de ladite seconde partie latérale dudit second carter afin de supporter ledit second élément de roue, grâce à quoi lesdits essieux uniques sont disposés en opposition de manière à supporter lesdits premier et second éléments de roue sur des côtés opposés desdits premier et second carters montés de manière adjacente ;
une zone agrandie définie par chacun desdits premier et second carters ; et
un ensemble de changement de vitesse disposé à l'intérieur de chacune desdites zones agrandies, chaque ensemble de changement de vitesse comprenant un arbre d'entrée (21) disposé sur un second axe longitudinal essentiellement perpendiculaire au dit premier axe longitudinal de manière à saillir à partir d'un côté supérieur de ladite zone agrandie desdits premier et second carters associés en fonctionnement avec ceux-ci, et comprenant un arbre de sortie (74) connecté en entraînement avec ledit essieu unique.

15. Appareil d'entraînement pour essieu selon la revendication 14 dans lequel chacun desdits ensembles de changement de vitesse comprend une transmission hydraulique en continu comprenant une pompe hydraulique (52) connectée au dit arbre d'entrée et un moteur hydraulique (55) connecté au dit arbre de sortie.

16. Appareil d'entraînement pour essieu selon la revendication 15, dans lequel chaque dite pompe hydraulique (52) est montée à l'intérieur de ladite zone agrandie desdits premier et second carters à une première distance présélectionnée à partir dudit essieu unique et dans lequel chaque dit moteur hydraulique est monté à l'intérieur de ladite zone agrandie desdits premier et second carters à une seconde distance présélectionnée à partir dudit essieu unique, ladite première distance présélectionnée étant plus grande que ladite seconde distance présélectionnée.

17. Appareil d'entraînement pour essieu selon la revendication 14 dans lequel ledit appareil comprend en outre une poulie d'entrée (28) disposée sur chaque dit arbre d'entrée (21) afin d'être connectée en entraînement par une courroie d'entraînement à une poulie d'entraînement d'un moteur dudit véhicule.

18. Appareil d'entraînement pour essieu selon la revendication 14 dans lequel ladite seconde partie latérale dudit premier carter est connectée de manière amovible à ladite première partie latérale dudit second carter.

19. Appareil d'entraînement pour essieu selon la revendication 14 dans lequel lesdites zones agrandies s'étendant de manière essentiellement horizontale lorsque lesdits premier et second carters (40) sont montés sur ledit corps de châssis dudit véhicule ; et dans lequel l'arbre d'entrée (21) de chaque dit ensemble de changement de vitesse étant disposé de manière essentiellement verticale et ladite extrémité la plus éloignée dudit arbre d'entrée étant en saillie à partir d'un côté supérieur de ladite zone agrandie associée en fonctionnement avec celui-ci ; et ladite extrémité la plus éloignée de chacun desdits arbres d'entrée supportant une poulie d'entrée destinée à faire tourner ledit arbre d'entrée, et comprenant une courroie d'entraînement (25) destinée à connecter en entraînement chaque dite poulie d'entrée à un moteur monté sur ledit véhicule.

20. Appareil d'entraînement pour essieu selon la revendication 19 dans lequel ledit moteur dudit véhicule comprend un vilebrequin (24) supportant une poulie d'entraînement (26) destinée à être connectée en entraînement aux dites poulies d'entrée dudit appareil d'entraînement pour essieu, et dans lequel ladite poulie d'entraînement (26) et ladite poulie d'entrée (28) sont disposées dans une orientation triangulaire en plan lorsque ledit appareil d'entraînement pour essieu est monté sur ledit corps de châssis dudit véhicule.

21. Appareil d'entraînement pour essieu selon la revendication 20 dans lequel ladite poulie d'entraînement est alignée dans un premier plan perpendiculaire à l'axe de rotation dudit vilebrequin (24) et dans lequel lesdites poulies d'entrée dudit appareil d'entraînement pour essieu sont alignées dans ledit premier plan et dans lequel ladite courroie d'entraînement unique est reçue autour desdites poulies d'entrée et de ladite poulie d'entraînement.

22. Appareil d'entraînement pour essieu selon la revendication 21 dans lequel ledit appareil comprend en outre une paire de poulies de tension (29) destinées à pousser en rotation une partie de ladite courroie d'entraînement unique, une desdites poulies de tension étant disposée le long du passage de ladite courroie d'entraînement entre l'une desdites poulies d'entrée et ladite poulie d'entraînement, et l'autre desdites poulies de tension étant disposée le long du passage de ladite courroie d'entraînement entre l'autre desdites poulies d'entrée et ladite poulie d'entraînement, permettant ainsi la tension sélective de ladite courroie d'entraînement.

23. Appareil d'entraînement pour essieu selon la revendication 14, chacun desdits premier et second carters définissant une longueur plus grande que la largeur desdits premier et second carters, ladite longueur de chacun desdits premier et second carters s'étendant à angle droit et horizontalement par rapport aux axes longitudinaux desdits premier et second essieux ;
ledit ensemble de changement de vitesse disposé à l'intérieur de chacun desdits premier et second carters comprenant un arbre d'entrée essentiellement vertical (21) et un arbre de sortie ; et
des moyens de transmission de puissance disposés à l'intérieur de chacun desdits premier et second carters destinés à connecter en entraînement lesdits arbres de sortie et lesdits essieux ;
dans lequel chacun desdits arbres d'entrée est disposé sur la longueur desdits premier et second carters à une première partie d'extrémité desdits premier et second carters, lesdits moyens de transmission de puissance étant disposés à l'intérieur et sur la longueur desdits premier et seconds carter à proximité du milieu desdits premier et second carters, et les axes sont disposés le long de la longueur desdits premier et second carters, respectivement, à une seconde partie d'extrémité desdits premier et second carters.

24. Appareil d'entraînement pour essieu selon la revendication 23, dans lequel :
chaque dit ensemble de changement de vitesse comprend une pompe hydraulique (52) et un moteur hydraulique (55) de manière à définir un ensemble de changement de vitesse hydraulique en continu (22), ladite pompe hydraulique étant connectée au dit arbre d'entrée, ledit arbre de sortie étant connecté au dit moteur hydraulique et étant disposé entre ledit arbre d'entrée (21) et ledit essieu de sorte que l'axe de rotation dudit arbre de sortie est essentiellement parallèle à l'axe de rotation dudit essieu ;
dans lequel chacun desdits moyens de transmission de puissance comprend :
un arbre secondaire (89) disposé entre ledit arbre de sortie (74) et ledit essieu (20L, 20R), l'axe de rotation dudit arbre secondaire étant essentiellement parallèle à l'axe dudit essieu ;
un premier train d'engrenages (90, 91) destiné à connecter ledit arbre de sortie et ledit arbre secondaire ; et
un second train d'engrenages (92, 94) destiné à connecter ledit arbre secondaire et ledit essieu ; et
dans lequel ledit moteur hydraulique comprend un bloc cylindres (69) et ledit second train d'engrenages est disposé en opposition au dit bloc cylindre.

25. Appareil d'entraînement pour essieu selon la revendication 23, dans lequel :
chaque dit ensemble de changement de vitesse comprend une pompe hydraulique (52) et un moteur hydraulique (55) de manière à définir un ensemble de changement de vitesse hydraulique en continu, ladite pompe hydraulique étant connectée au dit arbre d'entrée (21), ledit arbre de sortie (74) étant connecté au dit moteur hydraulique et étant disposé de sorte que l'axe de rotation dudit arbre de sortie est essentiellement à angle droit par rapport à l'axe de rotation dudit essieu ; et
dans lequel chacun desdits moyens de transmission de puissance comprend :
un arbre secondaire (89) disposé essentiellement à angle droit par rapport au dit arbre de sortie et essentiellement parallèle au dit essieu, ledit arbre secondaire étant disposé sur le côté opposé dudit essieu par rapport au dit moteur hydraulique de sorte que ledit essieu est disposé entre ledit moteur hydraulique et ledit arbre secondaire ;
un premier train d'engrenages de type à pignons coniques (90, 91) destiné à connecter ledit arbre de sortie et ledit arbre secondaire ; et
un second train d'engrenages (92, 94) destiné à connecter ledit arbre secondaire et ledit essieu.

26. Appareil d'entraînement pour essieu selon la revendication 23, dans lequel :
chaque dit ensemble de changement de vitesse comprend une pompe hydraulique (52) et un moteur hydraulique (55) de manière à définir un ensemble de changement de vitesse hydraulique en continu, ladite pompe hydraulique étant connectée au dit arbre d'entrée (21), ledit arbre de sortie étant connecté au dit moteur hydraulique et étant disposé de sorte que l'axe de rotation dudit arbre de sortie (21) est essentiellement parallèle à l'axe de rotation dudit arbre d'entrée, chaque ensemble de changement de vitesse comprenant également une section centrale définissant un corps plat destiné au montage de ladite pompe hydraulique et dudit moteur hydraulique, ladite section centrale étant disposée à l'intérieur d'une zone agrandie desdits premier et second carters à un niveau essentiellement intermédiaire sur la dimension verticale de ladite zone agrandie, ladite partie centrale définissant une ouverture au travers d'elle par laquelle une partie d'extrémité inférieure dudit arbre de sortie s'étend au travers de ladite section centrale et est en saillie à partir d'une surface inférieure de ladite section centrale ; et
dans lequel chacun desdits moyens de transmission de puissance comprend :
un arbre secondaire disposé essentiellement à angle droit par rapport au dit arbre de sortie et essentiellement parallèle au dit essieu, ledit arbre secondaire étant disposé en dessous de ladite section centrale;
un premier train d'engrenages de type à pignons coniques destiné à connecter ladite extrémité inférieure dudit arbre de sortie et ledit arbre secondaire ; et
un second train d'engrenages destiné à connecter ledit arbre secondaire et ledit essieu.

27. Appareil d'entraînement pour essieu selon la revendication 26, dans lequel ladite partie centrale définit une surface supérieure et dans lequel ledit carter définit au moins une partie supérieure de carter et une partie inférieure de carter reliées sur une surface de jonction qui est essentiellement parallèle à ladite surface supérieure de ladite section centrale.

28. Appareil d'entraînement pour essieu selon la revendication 27, dans lequel ledit arbre secondaire est disposé entre ladite partie supérieure de carter et ladite partie inférieure de carter.

29. Appareil d'entraînement pour essieu selon la revendication 26 dans lequel ladite section centrale comprend une partie de support destinée à supporter ledit arbre secondaire.

30. Appareil d'entraînement pour essieu selon la revendication 10, dans lequel ledit ensemble de changement de vitesse comprend une section centrale disposée de manière séparée dans ladite zone agrandie afin d'établir une communication par fluide entre ladite pompe hydraulique (55) et ledit moteur hydraulique (52), ladite section centrale comportant une surface de montage de pompe (51) destinée au montage de ladite pompe hydraulique et une surface de montage de moteur (54) destinée au montage dudit moteur hydraulique.

31. Appareil d'entraînement pour essieu selon la revendication 30, dans lequel ladite section centrale définit une première surface latérale sur laquelle est formée ladite surface de montage de pompe et définit une seconde surface latérale sur laquelle est formée ladite surface me montage de moteur, ladite seconde surface latérale étant disposée de manière essentiellement perpendiculaire à ladite première surface latérale de ladite section centrale.

32. Appareil d'entraînement pour essieu selon la revendication 30, dans lequel ladite section centrale définit une première surface latérale et dans lequel ladite surface de montage de pompe et ladite surface de montage de moteur sont formées sur ladite première surface latérale de ladite section centrale.

33. Appareil d'entraînement pour essieu selon la revendication 10, dans lequel ledit arbre de sortie est essentiellement perpendiculaire au dit arbre d'entrée.

34. Appareil d'entraînement pour essieu selon la revendication 10, dans lequel ledit arbre de sortie est essentiellement parallèle au dit arbre d'entrée.

35. Appareil d'entraînement pour essieu selon la revendication 34, dans lequel ledit arbre d'entrée est en saillie à partir de ladite zone agrandie sur un premier côté dudit carter, et ledit arbre de sortie définit une première partie d'extrémité en saillie à partir de ladite zone agrandie sur ledit premier côté dudit carter, et dans lequel ledit appareil d'entraînement pour essieu comprend en outre un ensemble de freinage monté sur ladite première partie d'extrémité dudit arbre de sortie afin de freiner ledit arbre de sortie de manière sélective.
